# EUROPEAN PATENT APPLICATION

(11) **EP 4 815 514 A1**
(43) Date of publication of application: **30.09.2026**
(21) Application number: 24902728.5
(22) Date of filing: 06.12.2024
(51) Int. Cl.: H04W 4/02

(54) **RANGING METHOD, APPARATUS, AND READABLE STORAGE MEDIUM**

(30) Priority: 15.12.2023 CN 202311739132; 08.03.2024 CN 202410269042
(71) Applicant: Huawei Technologies Co., Ltd., Shenzhen, Guangdong 518129 (CN)
(72) Inventor: QIAN, Bin, Shenzhen, Guangdong 518129 (CN); LIU, Chenchen, Shenzhen, Guangdong 518129 (CN); HUANG, Lei, Shenzhen, Guangdong 518129 (CN); CHITRAKAR, Rojan, Shenzhen, Guangdong 518129 (CN); YANG, Xun, Shenzhen, Guangdong 518129 (CN)
(74) Representative: Gill Jennings & Every LLP
(86) International application number: PCT/CN2024/137416
(87) International publication number: WO 2025/124307

(57) **Abstract**

This application relates to a ranging method, an apparatus, and a readable storage medium. The method includes: generating a plurality of RSFs/RIFs, and sending the plurality of RSFs/RIFs through a plurality of channels, where one RSF/RIF is transmitted on each channel, and a transmission start time interval between two adjacent RSFs/RIFs is less than or equal to 1 millisecond. According to this application, ranging accuracy can be improved. This application supports the UWB protocols, including the 802.15 series protocols, such as 802.15.4ab or a next-generation standard of 802.15.4ab, may further support a next-generation protocol of 802.11ax (for example, 802.11be, Wi-Fi 7, or EHT), a next-generation protocol of 802.11be (for example, Wi-Fi 8, UHR, or 11bn), or WLAN systems such as Wi-Fi AI or a millimeter wave, and may further support sensing protocols such as 802.11bf.

## Description

This application claims priorities to Chinese Patent Application No. 202311739132.1, filed with the China National Intellectual Property Administration on December 15, 2023 and entitled "RANGING METHOD, APPARATUS, AND READABLE STORAGE MEDIUM", and to Chinese Patent Application No. 202410269042.9, filed with the China National Intellectual Property Administration on March 8, 2024 and entitled "RANGING METHOD, APPARATUS, AND READABLE STORAGE MEDIUM", both of which are incorporated herein by reference in their entireties.

### TECHNICAL FIELD

This application relates to the field of communication technologies, and in particular, to a ranging method, an apparatus, and a readable storage medium.

### BACKGROUND

As ultra-widebands (ultra-wideband, UWB) enter the civilian field, ultra-wideband (UWB) wireless communication has become one of physical layer technologies for short-range and high-speed wireless networks. The ultra-wideband (UWB) technology is a wireless carrier communication technology that can transmit data, for example, by using nanosecond-level non-sinusoidal wave narrow pulses. Therefore, the ultra-wideband technology occupies a wide spectrum range. Due to narrow pulses and low radiation spectrum density, a UWB system has advantages of a strong multipath resolution capability, low power consumption, high confidentiality, and the like, and is mainly used in sensing and ranging scenarios.

The institute of electrical and electronics engineers (institute of electrical and electronics engineers, IEEE) has incorporated the UWB technology into IEEE 802 series wireless standards, and has released a high-speed wireless personal area network (wireless personal area network, WPAN) standard IEEE 802.15.4a based on the UWB technology, and an evolved version IEEE 802.15.4z of IEEE 802.15.4a. A next-generation UWB wireless personal area network (WPAN) standard 802.15.4ab is under discussion. One of the focuses of 802.15.4ab is the use of UWB pulses for ranging. However, ranging performance is directly proportional to an effective bandwidth, that is, a larger effective bandwidth indicates higher ranging accuracy. However, limited by performance of analog-to-digital converters (analog to digital converter, ADC), UWB devices with low costs and low power consumption are incapable of processing high-bandwidth signals.

Therefore, current ranging accuracy is not high enough and needs to be improved.

### SUMMARY

Embodiments of this application provide a ranging method, an apparatus, and a readable storage medium, to improve ranging accuracy and reduce time required for ranging, thereby improving ranging efficiency.

The following describes this application from different aspects. It should be understood that, for the following implementations and beneficial effect of different aspects, refer to each other.

According to a first aspect, this application provides a ranging method. The method may be applied to an initiator (initiator), or may be applied to a responder (responder). The method includes: A first communication apparatus generates P ranging fragments or P ranging packets, and sends the P ranging fragments or the P ranging packets to a second communication apparatus through K channels. K is an integer greater than 1, and P is greater than or equal to K. One ranging fragment or ranging packet is sequentially transmitted on the K channels. A transmission start time interval between two adjacent ranging fragments or ranging packets is less than or equal to T milliseconds. For example, T is equal to 1. This is because an average value of maximum power spectral density (power spectral density, PSD) of a UWB signal within one millisecond cannot be greater than -41.3 dBm per megahertz. For another example, if the average value of the maximum power spectral density of the UWB signal within a milliseconds does not exceed a threshold, T is equal to a.

It may be understood that, for the ranging packet, P is equal to K. Therefore, the foregoing method may be described as follows: The first communication apparatus generates K ranging packets, and sends the K ranging packets to the second communication apparatus through the K channels, where one ranging packet is transmitted on each of the K channels, and a transmission start time interval between two adjacent ranging packets is less than or equal to T milliseconds. For example, T is equal to 1.

A "ranging fragment" in this application may be a UWB fragment (UWB fragment) used for ranging, for example, a ranging sequence fragment (ranging sequence fragment, RSF) or a ranging integrity fragment (ranging integrity fragment, RIF).

For example, the P ranging fragments may be all RSFs, may be all RIFs, or may include both RSFs and RIFs. This is not limited in this application.

For example, the two adjacent ranging fragments may be ranging fragments of a same type, for example, both are RSFs or RIFs.

For example, if the P ranging fragments are all RSFs or RIFs, P is equal to K, and one ranging fragment (an RSF or an RIF) is transmitted on each of the K channels.

For example, if the P ranging fragments include both RSFs and RIFs, P is greater than K, and one RSF or one RIF is transmitted on one of the K channels. For example, the P ranging fragments include P1 RSFs and (P-P1) RIFs, where both P1 and (P-P1) are positive integers less than or equal to K, and P1 is equal to K, or (P-P1) is equal to K. For the P1 RSFs, if P1 is equal to K, one RSF is transmitted on each of the K channels; or if P1 is less than K, the P1 RSFs are transmitted on P1 channels in the K channels, and one RSF is transmitted on each of the P1 channels. For the (P-P1) RIFs, if (P-P1) is equal to K, one RIF is transmitted on each of the K channels; or if (P-P1) is less than K, the (P-P1) RIFs are transmitted on (P-P1) channels in the K channels, and one RIF is transmitted on each of the (P-P1) channels. In addition, both a first RSF and a first RIF are transmitted by using a base channel of the K channels.

In addition, "and/or" is used for describing an association relationship between associated objects, and represents that three relationships may exist. For example, "A and/or B" may represent the following three cases: Only A exists, only B exists, and both A and B exist, where A and B may be singular or plural.

In this application, a plurality of ranging fragments/ranging packets are transmitted by using a plurality of channels, and one RSF, one RIF, or one ranging packet is transmitted on one channel, so that frequency stitching is implemented at a receiver, thereby improving ranging accuracy. In addition, in this application, the transmission start time interval between the two adjacent ranging fragments/ranging packets is allowed to be less than 1 millisecond. In this way, time required for ranging can be reduced, thereby improving ranging efficiency.

With reference to the first aspect, in a possible implementation, if the P ranging fragments include both RSFs and RIFs, a transmission start time interval between a last RSF and a first RIF is 2 milliseconds.

With reference to the first aspect, in a possible implementation, sequentially transmitting through the K channels may be understood as: sequentially using the K channels in ascending or descending order of center frequencies, or skipping sequentially using the K channels in ascending or descending order of center frequencies.

With reference to the first aspect, in a possible implementation, the K channels may be used for frequency stitching (Frequency Stitching). Channel transmission order of the K channels may be: sequentially using the K channels in the ascending or descending order of the center frequencies, that is, in-sequence channel order (in-sequence channel order). Alternatively, channel transmission order of the K channels may be: skipping sequentially using the K channels in ascending or descending order of center frequencies. In other words, the channel transmission order of the K channels may be: using the K channels in the ascending or descending order of the center frequencies in a non-sequential manner, that is, out-of-sequence channel order (out-of-sequence channel order).

For example, when the channel transmission order of the K channels is: sequentially using the K channels in the ascending or descending order of the center frequencies, if there is no (frequency) overlap between the K channels or an overlap rate is 25%, the transmission start time interval between the two adjacent ranging fragments (for example, two adjacent RSFs or two adjacent RIFs) or the two adjacent ranging packets may be less than 1 millisecond. Alternatively, if an overlap rate between the K channels is 50% or 75%, the transmission start time interval between the two adjacent ranging fragments (for example, two adjacent RSFs or two adjacent RIFs) or the two adjacent ranging packets is equal to 1 millisecond.

This is because, for the in-sequence channel order, when an overlap rate between two adjacent channels is 25%, maximum combined power spectral density of two UWB signals on the adjacent channels within 1 millisecond does not exceed -41.3 dBm per megahertz; or when an overlap rate between two adjacent channels is 50% or 75%, maximum combined power spectral density of two UWB signals on the adjacent channels within 1 millisecond exceeds -41.3 dBm per megahertz. Therefore, when the channel transmission order of the K channels is: sequentially using the K channels in the ascending or descending order of the center frequencies, if there is no overlap between the channels or an overlap rate is 25%, the transmission start time interval between the two adjacent ranging fragments (for example, two adjacent RSFs or two adjacent RIFs) or the two adjacent ranging packets may be less than 1 millisecond. In this way, each ranging fragment/ranging packet can be transmitted at allowed maximum average power (maximum average power per millisecond and per megahertz bandwidth is -41.3 dBm), and a time interval between ranging fragments/ranging packets can be reduced, thereby reducing time required for ranging and improving ranging efficiency. However, if an overlap rate between the channels is 50% or 75%, the transmission start time interval between the two adjacent ranging fragments (for example, two adjacent RSFs or two adjacent RIFs) or the two adjacent ranging packets is equal to 1 millisecond. In this way, each ranging fragment/ranging packet can be transmitted at allowed maximum average power (maximum average power per millisecond and per megahertz bandwidth is -41.3 dBm), so that instantaneous power of the ranging fragment can be improved, thereby increasing a coverage area and improving a signal-to-noise ratio of a signal received by the receiver.

For example, when the channel transmission order of the K channels is: skipping sequentially using the K channels in the ascending or descending order of the center frequencies, because two adjacent channels in transmission do not overlap in frequency domain, the transmission start time interval between the two adjacent ranging fragments (for example, two adjacent RSFs or two adjacent RIFs) or between the two adjacent ranging packets may be less than 1 millisecond. In this way, the coverage area can be increased, the signal-to-noise ratio of the signal received by the receiver can be improved, and a time interval between ranging fragments/ranging packets can be reduced, thereby reducing time required for ranging and improving ranging efficiency.

With reference to the first aspect, in a possible implementation, in a bidirectional ranging scenario, a transmission start time interval between a first ranging fragment/ranging packet sent by the first communication apparatus and a first ranging fragment/ranging packet sent by the second communication apparatus is t_{O}. Alternatively, a transmission start time interval between a last ranging fragment/ranging packet sent by the first communication apparatus and a first ranging fragment/ranging packet sent by the second communication apparatus is t_{O}. t_{O} is less than or equal to 0.5 milliseconds.

For example, t_{O} satisfies: ${t}_{O} = \frac{1}{2} {t}_{I} .$

t_{I} represents the transmission start time interval between the two adjacent ranging fragments (for example, two adjacent RSFs or two adjacent RIFs) or between the two adjacent ranging packets.

With reference to the first aspect, in a possible implementation, before the first communication apparatus sends the P ranging fragments or the P ranging packets, the method further includes: The first communication apparatus sends or receives configuration information, where the configuration information includes first indication information, the first indication information includes a first field, and the first field indicates the transmission start time interval between the two adjacent ranging fragments (for example, two adjacent RSFs or two adjacent RIFs) or the two adjacent ranging packets. In other words, the first field may indicate a value of t_{I}.

For example, the configuration information may be configured through an ultra-wideband (UWB). In other words, the first communication apparatus may send or receive the configuration information through the UWB. For example, the configuration information may be a multi-millisecond (Multi-millisecond, MMS) ranging configuration (MMS Ranging Configuration) field in an application control information element (application control information element, AC IE).

For example, the configuration information may be configured through a narrowband. In other words, the first communication apparatus may send or receive the configuration information through the narrowband. For example, the configuration information may be a UWB physical layer configuration field in the narrowband.

In this application, the value of t_{I} is indicated through signaling (that is, the first field), so that information between the initiator and the responder can be aligned, thereby laying a foundation for a subsequent ranging process, and obtaining higher ranging accuracy and ranging efficiency.

With reference to the first aspect, in a possible implementation, the configuration information may further include one or more of the following: second indication information or third indication information. The second indication information may indicate whether the first indication information is present. When the second indication information indicates that the first indication information is not present, the third indication information may indicate a UWB channel used for multi-millisecond ranging. When the second indication information indicates that the first indication information is present, the third indication information may indicate a base channel (Base Channel) for multi-millisecond ranging using frequency stitching, or indicate a base channel for frequency stitching. In this application, the second indication information indicates that the first indication information is present.

For example, the third indication information may be a UWB channel (UWB channel) field in an MMS Ranging Configuration field or a UWB physical layer configuration field.

In this application, the second indication information indicates whether the first indication information is present, so that better compatibility with existing multi-millisecond ranging can be achieved. In addition, in this application, the UWB channel field in an existing field is reused to indicate the base channel, so that the number of bits can be reduced.

With reference to the first aspect, in a possible implementation, the first indication information further includes a second field. The second field may indicate the transmission start time interval between the first ranging fragment or ranging packet of the first communication apparatus and the first ranging fragment or ranging packet of the second communication apparatus (that is, the value of t_{O}). Alternatively, the second field may indicate the transmission start time interval between the last ranging fragment or ranging packet of the first communication apparatus and the first ranging fragment or ranging packet of the second communication apparatus (that is, the value of t_{O}).

In this application, the value of t_{O} is indicated through signaling (that is, the second field), so that a time offset for transmitting a ranging fragment or ranging packet between the initiator and the responder can be more flexibly set.

With reference to the first aspect, in a possible implementation, the first indication information further includes a channel sequence order field. When a value of the channel sequence order field is a first value, it indicates that the channel transmission order used for frequency stitching is: skipping sequentially using in ascending or descending order of center frequencies. When a value of the channel sequence order field is a second value, it indicates that channel transmission order used for frequency stitching is: sequentially using in ascending or descending order of center frequencies. For example, the first value is 1, and the second value is 0.

With reference to the first aspect, in a possible implementation, the first indication information further includes a carrier frequency spacing field. When a value of the carrier frequency spacing field is a first value, it indicates that there is no overlap between channels used for frequency stitching. When a value of the carrier frequency spacing field is a second value, it indicates that an overlap rate between channels used for frequency stitching is 25%. When a value of the carrier frequency spacing field is a third value, it indicates that an overlap rate between channels used for frequency stitching is 50%. When a value of the carrier frequency spacing field is a fourth value, it indicates that an overlap rate between channels used for frequency stitching is 75%. For example, the first value is 0, the second value is 1, the third value is 2, and the fourth value is 3.

According to a second aspect, this application provides a ranging method. The method may be applied to an initiator (initiator), or may be applied to a responder (responder). The method includes: A second communication apparatus sequentially receives P ranging fragments or P ranging packets through K channels, where K is an integer greater than 1, P is greater than or equal to K, and a transmission start time interval between two adjacent ranging fragments or ranging packets is less than or equal to T milliseconds; and the second communication apparatus determines a channel impulse response based on the P ranging fragments or the P ranging packets. For example, T is equal to 1. For another example, if an average value of maximum power spectral density of a UWB signal within a milliseconds does not exceed a threshold, T is equal to a.

For example, the P ranging fragments may be all RSFs, may be all RIFs, or may include both RSFs and RIFs. This is not limited in this application.

For example, two adjacent ranging fragments may be ranging fragments of a same type, for example, both are RSFs or RIFs.

With reference to the second aspect, in a possible implementation, before the second communication apparatus receives the P ranging fragments or the P ranging packets, the method further includes: The second communication apparatus receives or sends configuration information, where the configuration information includes first indication information, the first indication information includes a first field, and the first field indicates a transmission start time interval between two adjacent ranging fragments (for example, two adjacent RSFs or two adjacent RIFs) or two adjacent ranging packets transmitted on different channels. For related descriptions of the configuration information and the first indication information, refer to descriptions in the following embodiments. Details are not described herein.

According to a third aspect, this application provides a communication apparatus. The communication apparatus is configured to perform the method according to the first aspect or any one of the possible implementations of the first aspect. The communication apparatus includes a unit that can perform the method according to the first aspect or any one of the possible implementations of the first aspect.

According to a fourth aspect, this application provides a communication apparatus. The communication apparatus is configured to perform the method according to the second aspect or any one of the possible implementations of the second aspect. The communication apparatus includes a unit that can perform the method according to the second aspect or any one of the possible implementations of the second aspect.

In the third aspect or the fourth aspect, the communication apparatus may include a transceiver unit and a processing unit. For specific descriptions of the transceiver unit and the processing unit, refer to apparatus embodiments shown below. For beneficial effect of the third aspect and the fourth aspect, refer to the related descriptions of the first aspect and the second aspect. Details are not described herein again.

According to a fifth aspect, this application provides a ranging method. The method may be applied to an initiator (initiator), or may be applied to a responder (responder). The method includes: A first communication apparatus generates P ranging fragments or P ranging packets, and sends the P ranging fragments or the P ranging packets to a second communication apparatus through K channels. At least n ranging fragments are transmitted on each of the K channels, where n, K, and P are all integers greater than 1, and both n and K are less than P. A transmission start time interval between two adjacent ranging fragments/ranging packets transmitted on different channels is less than or equal to T milliseconds. For example, T may be equal to 1. This is because an average value of maximum power spectral density (PSD) of a UWB signal within one millisecond cannot be greater than -41.3 dBm per megahertz. For another example, if an average value of maximum power spectral density of a UWB signal within a milliseconds does not exceed a threshold, T is equal to a.

It may be understood that, for the ranging packets, P is equal to a product of n and K. Therefore, the foregoing method may be further described as follows: The first communication apparatus generates P(=n*K) ranging packets, and sends the P ranging packets to the second communication apparatus through the K channels, where n (n is an integer greater than 1) ranging packets are transmitted on each of the K channels, and the transmission start time interval between the two adjacent ranging packets transmitted on different channels is less than or equal to T milliseconds. For example, T may be equal to 1.

For example, the P ranging fragments may be all RSFs, may be all RIFs, or may include both RSFs and RIFs. This is not limited in this application.

For example, the two adjacent ranging fragments may be ranging fragments of a same type, for example, both are RSFs or RIFs.

For example, if all the P ranging fragments are RSFs or RIFs, P is equal to a product of n and K. In this case, n ranging fragments (RSFs or RIFs) are transmitted on each of the K channels.

For example, if the P ranging fragments include both RSFs and RIFs, P is greater than a product of n and K, and at least n ranging fragments are transmitted on each of the K channels. For example, the P ranging fragments include R RSFs and M RIFs, where both R and M are positive integers less than or equal to a product of n and K, and R is equal to a product of n and K, or M is equal to a product of n and K. For the R RSFs, if R is equal to a product of n and K, n RSFs are transmitted on each of the K channels; or if R is less than a product of n and K, the R RSFs are transmitted on $\left⌈R/n\right⌉$ channels in the K channels, n RSFs are transmitted on each of the $\left⌈R/n\right⌉$ channels other than a last channel, and remaining RSFs are transmitted on the last channel. For the M RIFs, if M is equal to a product of n and K, n RIFs are transmitted on each of the K channels; or if M is less than a product of n and K, the M RIFs are transmitted on $\left⌈M/n\right⌉$ channels in the K channels, n RIFs are transmitted on each of the $\left⌈M/n\right⌉$ channels other than a last channel, and remaining RIFs are transmitted on the last channel. In addition, both a first RSF and a first RIF are transmitted by using a base channel of the K channels.

In this application, the symbol "┌ ┐" represents rounding up. Details are not described below again.

In this application, a plurality of ranging fragments/ranging packets are transmitted by using a plurality of channels, and a plurality of RSFs, a plurality of RIFs, or a plurality of ranging packets are transmitted on one channel, so that frequency stitching is implemented at a receiver, thereby improving (long-range) ranging accuracy. In addition, in this application, a transmission start time interval between two adjacent ranging fragments/ranging packets transmitted on different channels is allowed to be less than 1 millisecond. In this way, time required for ranging can be reduced, thereby improving ranging efficiency.

With reference to the fifth aspect, in a possible implementation, a transmission start time interval between two adjacent ranging fragments (for example, two adjacent RSFs or two adjacent RIFs) or two adjacent ranging packets transmitted on a same channel is equal to 1 millisecond.

With reference to the fifth aspect, in a possible implementation, if the P ranging fragments include both RSFs and RIFs, a transmission start time interval between a last RSF and a first RIF is 2 milliseconds.

With reference to the fifth aspect, in a possible implementation, the K channels may be used for frequency stitching (Frequency Stitching). Channel transmission order of the K channels may be: sequentially using the K channels in ascending or descending order of center frequencies, that is, in-sequence channel order (in-sequence channel order). Alternatively, channel transmission order of the K channels may be: skipping sequentially using the K channels in ascending or descending order of center frequencies. In other words, the channel transmission order of the K channels may be: using the K channels in the ascending or descending order of the center frequencies in a non-sequential manner, that is, out-of-sequence channel order (out-of-sequence channel order).

For example, when the channel transmission order of the K channels is: sequentially using the K channels in the ascending or descending order of the center frequencies, if there is no (frequency) overlap between the K channels or an overlap rate is 25%, a transmission start time interval between two adjacent ranging fragments (for example, two adjacent RSFs or two adjacent RIFs) or two adjacent ranging packets transmitted on different channels may be less than 1 millisecond. In this way, each ranging fragment/ranging packet can be transmitted at allowed maximum average power (maximum average power per millisecond and per megahertz bandwidth is -41.3 dBm), and a time interval between ranging fragments/ranging packets can be reduced, thereby reducing time required for ranging and improving ranging efficiency. If an overlap rate between the K channels is 50% or 75%, a transmission start time interval between two adjacent ranging fragments (for example, two adjacent RSFs or two adjacent RIFs) or two adjacent ranging packets transmitted on different channels is equal to 1 millisecond. In this way, each ranging fragment/ranging packet may be transmitted at allowed maximum average power, so that instantaneous power of the ranging fragment may be increased, thereby increasing a coverage area and improving a signal-to-noise ratio of a signal received by a receiver.

For example, when the channel transmission order of the K channels is: skipping sequentially using the K channels in the ascending or descending order of the center frequencies, a transmission start time interval between two adjacent ranging fragments (for example, two adjacent RSFs or two adjacent RIFs) or two adjacent ranging packets transmitted on different channels may be less than 1 millisecond. In this way, the coverage area can be increased, the signal-to-noise ratio of the signal received by the receiver can be improved, and a time interval between ranging fragments/ranging packets can be reduced, thereby reducing time required for ranging and improving ranging efficiency.

With reference to the fifth aspect, in a possible implementation, in a bidirectional ranging scenario, a transmission start time interval between a first ranging fragment/ranging packet sent by the first communication apparatus and a first ranging fragment/ranging packet sent by the second communication apparatus is to. Alternatively, a transmission start time interval between a last ranging fragment/ranging packet sent by the first communication apparatus and a first ranging fragment/ranging packet sent by the second communication apparatus is t_{O}. t_{O} is less than or equal to 0.5 milliseconds.

For example, to satisfies: ${t}_{O} = \frac{1}{2} {t}_{I} .$

t_{I} represents the transmission start time interval between the two adjacent ranging fragments (for example, two adjacent RSFs or two adjacent RIFs) or the two adjacent ranging packets transmitted on different channels.

For example, t_{O} is fixed at 0.5 milliseconds.

With reference to the fifth aspect, in a possible implementation, before the first communication apparatus sends the P ranging fragments or the P ranging packets, the method further includes: The first communication apparatus sends or receives configuration information, where the configuration information includes first indication information, the first indication information includes a first field, and the first field indicates the transmission start time interval between the two adjacent ranging fragments (for example, two adjacent RSFs or two adjacent RIFs) or the two adjacent ranging packets transmitted on different channels.

For example, the configuration information may be configured through an ultra-wideband (UWB). In other words, the first communication apparatus may send or receive the configuration information through the UWB. For example, the configuration information may be an MMS Ranging Configuration field in an AC IE.

For example, the configuration information may be configured through the narrowband. In other words, the first communication apparatus may send or receive the configuration information through the narrowband. For example, the configuration information may be a UWB physical layer configuration field in the narrowband.

With reference to the fifth aspect, in a possible implementation, the configuration information may further include one or more of the following: second indication information or third indication information. The second indication information may indicate whether the first indication information is present. When the second indication information indicates that the first indication information is not present, the third indication information may indicate a UWB channel used for multi-millisecond ranging. When the second indication information indicates that the first indication information is present, the third indication information may indicate a base channel (Base Channel) for multi-millisecond ranging using frequency stitching, or indicate a base channel for frequency stitching. In this application, the second indication information indicates that the first indication information is present.

For example, the third indication information may be a UWB channel (UWB channel) field in the MMS Ranging Configuration field or the UWB physical layer configuration field.

With reference to the fifth aspect, in a possible implementation, the first indication information further includes a second field. The second field may indicate the number of ranging fragments or ranging packets transmitted on each channel. In other words, the second field may indicate a value of n.

With reference to the fifth aspect, in a possible implementation, the first indication information further includes a third field. The third field may indicate the value of t_{O}.

With reference to the fifth aspect, in a possible implementation, the first indication information further includes a channel sequence order field. When a value of the channel sequence order field is a first value, it indicates that the channel transmission order used for frequency stitching is: skipping sequentially using in ascending or descending order of center frequencies. When a value of the channel sequence order field is the second value, it indicates that the channel transmission order used for frequency stitching is: sequentially using in ascending or descending order of center frequencies. For example, the first value is 1, and the second value is 0.

With reference to the fifth aspect, in a possible implementation, the first indication information further includes a carrier frequency spacing field. When a value of the carrier frequency spacing field is a first value, it indicates that there is no overlap between channels used for frequency stitching. When a value of the carrier frequency spacing field is a second value, it indicates that an overlap rate between channels used for frequency stitching is 25%. When a value of the carrier frequency spacing field is a third value, it indicates that an overlap rate between channels used for frequency stitching is 50%. When a value of the carrier frequency spacing field is a fourth value, it indicates that an overlap rate between channels used for frequency stitching is 75%. For example, the first value is 0, the second value is 1, the third value is 2, and the fourth value is 3.

According to a sixth aspect, this application provides a ranging method. The method may be applied to an initiator (initiator), or may be applied to a responder (responder). The method includes: A second communication apparatus receives P ranging fragments or P ranging packets through K channels, where at least n ranging fragments are transmitted on each of the K channels, n, K, and P are all integers greater than 1, both n and K are less than P, and a transmission start time interval between two adjacent ranging fragments/ranging packets transmitted on different channels is less than or equal to T milliseconds; and the second communication apparatus determines a channel impulse response based on the P ranging fragments or the P ranging packets. For example, T may be equal to 1. For another example, if an average value of maximum power spectral density of a UWB signal within a milliseconds does not exceed a threshold, T is equal to a.

For example, the P ranging fragments may be all RSFs, may be all RIFs, or may include both RSFs and RIFs. This is not limited in this application.

For example, the two adjacent ranging fragments may be ranging fragments of a same type, for example, both are RSFs or RIFs.

With reference to the sixth aspect, in a possible implementation, before the second communication apparatus receives the P ranging fragments or the P ranging packets, the method further includes: The second communication apparatus receives or sends configuration information, where the configuration information includes first indication information, the first indication information includes a first field, and the first field indicates the transmission start time interval between the two adjacent ranging fragments (for example, two adjacent RSFs or two adjacent RIFs) or the two adjacent ranging packets transmitted on different channels. For related descriptions of the configuration information and the first indication information, refer to descriptions in the following embodiments. Details are not described herein.

According to a seventh aspect, this application provides a communication apparatus. The communication apparatus may be a first communication apparatus or a chip in the first communication apparatus. The communication apparatus includes a unit and/or module configured to perform the method provided in the fifth aspect or any one of the possible implementations of the fifth aspect, for example, a transceiver unit and/or a processing unit. The transceiver unit is configured to receive/send various information or signaling. Therefore, beneficial effect (or advantages) of the method provided in the fifth aspect can also be implemented.

For example, the processing unit is configured to generate P ranging fragments or P ranging packets; and the transceiver unit is configured to send the P ranging fragments or the P ranging packets to a second communication apparatus through K channels. At least n ranging fragments are transmitted on each of the K channels, where n, K, and P are all integers greater than 1, and both n and K are less than P. A transmission start time interval between two adjacent ranging fragments/ranging packets transmitted on different channels is less than or equal to T milliseconds. For example, T may be equal to 1. For another example, if an average value of maximum power spectral density of a UWB signal within a milliseconds does not exceed a threshold, T is equal to a.

For example, the transceiver unit is further configured to send or receive configuration information, where the configuration information includes first indication information, the first indication information includes a first field, and the first field indicates a transmission start time interval between two adjacent ranging fragments (for example, two adjacent RSFs or two adjacent RIFs) or two adjacent ranging packets transmitted on different channels.

For descriptions of the K channels, the P ranging fragments, the P ranging packets, the transmission start time interval between the two adjacent ranging fragments or ranging packets transmitted on different channels, the configuration information, and the like, refer to descriptions in the fifth aspect. Details are not described herein again.

According to an eighth aspect, this application provides a communication apparatus. The communication apparatus may be a second communication apparatus or a chip in the second communication apparatus. The communication apparatus includes a unit and/or module configured to perform the method provided in the sixth aspect or any one of the possible implementations of the sixth aspect, for example, a transceiver unit and/or a processing unit. The transceiver unit is configured to receive/send various information or signaling. Therefore, beneficial effect (or advantages) of the method provided in the sixth aspect can also be implemented.

For example, the transceiver unit is configured to receive P ranging fragments or P ranging packets through K channels, where at least n ranging fragments are transmitted on each of the K channels, n, K, and P are all integers greater than 1, both n and K are less than P, and a transmission start time interval between two adjacent ranging fragments/ranging packets transmitted on different channels is less than or equal to T milliseconds; and the processing unit is configured to determine a channel impulse response based on the P ranging fragments or the P ranging packets. For example, T may be equal to 1. For another example, if an average value of maximum power spectral density of a UWB signal within a milliseconds does not exceed a threshold, T is equal to a.

For example, the transceiver unit is further configured to receive or send configuration information, where the configuration information includes first indication information, the first indication information includes a first field, and the first field indicates a transmission start time interval between two adjacent ranging fragments (for example, two adjacent RSFs or two adjacent RIFs) or two adjacent ranging packets transmitted on different channels.

For descriptions of the K channels, the P ranging fragments, the P ranging packets, the transmission start time interval between the two adjacent ranging fragments or ranging packets transmitted on different channels, the configuration information, and the like, refer to descriptions in the fifth aspect. Details are not described herein again.

According to a ninth aspect, this application provides a communication apparatus. The communication apparatus includes a processor, configured to perform the method according to the first aspect, the second aspect, the fifth aspect, the sixth aspect, or any possible implementation of any one of the foregoing aspects. Alternatively, the processor is configured to execute a program stored in a memory. When the program is executed, the method according to the first aspect, the second aspect, the fifth aspect, the sixth aspect, or any possible implementation of any one of the foregoing aspects is performed.

With reference to the ninth aspect, in a possible implementation, the memory is located outside the communication apparatus.

With reference to the ninth aspect, in a possible implementation, the memory is located inside the communication apparatus.

In this application, the processor and the memory may alternatively be integrated into one component, that is, the processor and the memory may alternatively be integrated together.

With reference to the ninth aspect, in a possible implementation, the communication apparatus further includes a transceiver, and the transceiver is configured to send or receive a ranging fragment/ranging packet.

According to a tenth aspect, this application provides a communication apparatus. The communication apparatus may include a processor and an interface circuit, and the processor is connected to the interface circuit. The interface circuit is configured to exchange (or send/receive, or input/output) information or data, and the processor is configured to run program instructions, to enable the communication apparatus to perform the method according to the first aspect, the second aspect, the fifth aspect, the sixth aspect, or any possible implementation of any one of the foregoing aspects. The interface circuit may be a communication interface or a transceiver. The transceiver may be a radio frequency module in the communication apparatus, a combination of a radio frequency module and an antenna, or an input/output interface of a chip or a circuit.

According to an eleventh aspect, this application provides a readable storage medium. The readable storage medium stores program instructions, and when the program instructions are run on a computer, the computer is enabled to perform the method according to the first aspect, the second aspect, the fifth aspect, the sixth aspect, or any possible implementation of any one of the foregoing aspects.

According to a twelfth aspect, this application provides a program product including program instructions. When the program product runs, the method according to the first aspect, the second aspect, the fifth aspect, the sixth aspect, or any possible implementation of any one of the foregoing aspects is performed.

According to a thirteenth aspect, this application provides an apparatus. The apparatus may be implemented in a form of a chip, or may be in a form of a device. The apparatus includes a processor. The processor is configured to read and execute a program stored in a memory, to perform an information exchange method in a UWB system according to one or more of the first aspect, the second aspect, the fifth aspect, and the sixth aspect, or one or more of any possible implementations of any one of the foregoing aspects. Optionally, the apparatus further includes the memory, and the memory is connected to the processor through a circuit. Further, optionally, the apparatus further includes a communication interface, and the processor is connected to the communication interface. The communication interface is configured to receive to-be-processed information. The processor obtains the information from the communication interface, processes the information, and outputs a processing result through the communication interface. The communication interface may be an input/output interface.

In a possible implementation, the processor and the memory may be physically independent units, or the memory may be integrated with the processor.

According to a fourteenth aspect, this application provides a wireless communication system. The wireless communication system includes a first communication apparatus and a second communication apparatus. The first communication apparatus is configured to perform the method according to the first aspect or the fifth aspect, or any possible implementation of any one of the foregoing aspects, and the second communication apparatus is configured to perform the method according to the second aspect or the sixth aspect, or any possible implementation of any one of the foregoing the aspects.

For technical effect achieved in the foregoing aspects, refer to each other or refer to beneficial effect in the method embodiment described below. Details are not repeated herein.

### BRIEF DESCRIPTION OF DRAWINGS

FIG. 1 is a diagram of a structure of a wireless communication system according to an embodiment of this application;
FIG. 2 is a diagram of another structure of a wireless communication system according to an embodiment of this application;
FIG. 3 is a diagram of fragmented transmission of a UWB signal according to an embodiment of this application;
FIG. 4 is a possible diagram of a PPDU structure according to an embodiment of this application;
FIG. 5 is a diagram of a ranging principle according to an embodiment of this application;
FIG. 6 is a diagram of signal transmission in multi-millisecond ranging according to an embodiment of this application;
FIG. 7 is a diagram of out-of-sequence channel order according to an embodiment of this application;
FIG. 8 is a diagram of in-sequence channel order according to an embodiment of this application;
FIG. 9 is a schematic flowchart of a ranging method according to an embodiment of this application;
FIG. 10 is a diagram of a transmission start time interval between ranging fragments according to an embodiment of this application;
FIG. 11a is a diagram of interlaced transmission according to an embodiment of this application;
FIG. 11b is a diagram of serial transmission according to an embodiment of this application;
FIG. 12a is a diagram of tₘᵢₙ in interlaced transmission according to an embodiment of this application;
FIG. 12b is a diagram of tₘᵢₙ in serial transmission according to an embodiment of this application;
FIG. 13 is a schematic flowchart of an information configuration method according to an embodiment of this application;
FIG. 14 is a diagram of a frame format of a multi-millisecond ranging configuration field according to an embodiment of this application;
FIG. 15 is a diagram of a frame format of a UWB physical layer configuration field according to an embodiment of this application;
FIG. 16 is a diagram of a frame format of an MMS Frequency Stitching Parameters field according to an embodiment of this application;
FIG. 17 is a diagram of another frame format of an MMS Frequency Stitching Parameters field according to an embodiment of this application;
FIG. 18a is a diagram of a frame format of a sensing control field according to an embodiment of this application;
FIG. 18b is a diagram of a frame format of a frequency stitching parameters field in a sensing control field according to an embodiment of this application;
FIG. 19a is a diagram of a frame format of an AC IE according to an embodiment of this application;
FIG. 19b is a diagram of a frame format of a content control field in an AC IE according to an embodiment of this application;
FIG. 20 is another schematic flowchart of a ranging method according to an embodiment of this application;
FIG. 21 is another diagram of a transmission start time interval between ranging fragments according to an embodiment of this application;
FIG. 22a is another diagram of interlaced transmission according to an embodiment of this application;
FIG. 22b is another diagram of serial transmission according to an embodiment of this application;
FIG. 23 is another schematic flowchart of an information configuration method according to an embodiment of this application;
FIG. 24a is a diagram of still another frame format of an MMS Frequency Stitching Parameters field according to an embodiment of this application;
FIG. 24b is a diagram of yet another frame format of an MMS Frequency Stitching Parameters field according to an embodiment of this application;
FIG. 25 is still another schematic flowchart of a ranging method according to an embodiment of this application;
FIG. 26 is a diagram of frequency stitching in a ranging fragment according to an embodiment of this application;
FIG. 27 is a diagram of a structure of a communication apparatus according to an embodiment of this application;
FIG. 28 is a diagram of another structure of a communication apparatus according to an embodiment of this application; and
FIG. 29 is a diagram of still another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, words such as "first" and "second" are merely used to distinguish between different objects, and do not limit numbers and execution sequences. In addition, the words such as "first" and "second" do not indicate a definite difference. In addition, terms such as "include" and "have" and any other variants thereof are intended to cover non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In the descriptions of this application, "at least one (item)" means one or more, "a plurality of" means two or more, and "at least two (items)" means two, three, or more. In addition, "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between associated objects. "One or more of the following items (pieces)" or a similar expression thereof means any combination of these items. For example, one or more item (pieces) of the following: a, b, or c, may represent: a, b, c, "a and b", "a and c", "b and c", or "a, b, and c".

In this application, the word "example" or "for example" represents giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

In descriptions of this application, both "when", "in a case of", and "if" mean that an apparatus performs corresponding processing in an objective situation, are not intended to limit time, do not require the apparatus to necessarily have a determining action during implementation, and do not mean another limitation.

In this application, unless otherwise specified, an element represented in a singular form is intended to represent "one or more", but does not represent "one and only one".

In embodiments of this application, "B corresponding to A" or a similar expression thereof indicates that B is associated with A, and B may be determined based on A. Determining B based on A does not mean that B is determined based only on A. B may alternatively be determined based on A and/or other information.

The technical solutions provided in this application may be applicable to a wireless personal area network (wireless personal area network, WPAN) based on a UWB technology. For example, a method provided in this application may be applicable to IEEE 802.15 series protocols, for example, the 802.15.4a protocol, the 802.15.4z protocol, or the 802.15.4ab protocol, or a future generation UWB WPAN standard. Examples are not enumerated herein. The method provided in this application may be further applied to various communication systems, such as an internet of things (internet of things, IoT) system, vehicle-to-everything (vehicle to X, V2X), and a narrowband internet of things (narrowband internet of things, NB-IoT) system, or may be applied to a device in vehicle-to-everything, an internet of things node, a sensor, or the like in the internet of things (IoT, internet of things), a smart camera, a smart remote control, and a smart water or electricity meter in a smart home, a sensor in a smart city, and the like. The method provided in this application is further applicable to a long term evolution (long term evolution, LTE) frequency division duplex (frequency division duplex, FDD) system, LTE time division duplex (time division duplex, TDD), a universal mobile telecommunication system (universal mobile telecommunication system, UMTS), a worldwide interoperability for microwave access (worldwide interoperability for microwave access, WiMAX) communication system, an LTE system, a 5th-generation (5th-generation, 5G) communication system, a 6th-generation (6th-generation, 6G) communication system, and the like.

The UWB technology is a new wireless communication technology that can transmit data by using nanosecond-level non-sinusoidal wave narrow pulses, perform modulation on impulses with very steep rise and fall time. Therefore, the UWB technology occupies a very wide spectrum range for transmission, so that signals have bandwidths in a gigahertz (GHz) range. Bandwidths used by UWBs are usually higher than 500 MHz. A UWB system does not need to generate a sinusoidal carrier signal and may directly transmit an impulse sequence. Therefore, the UWB system has a wide spectrum and low average power. The UWB wireless communication system has advantages of a strong multipath resolution capability, low power consumption, high confidentiality, and the like. This facilitates coexistence with other systems, and improves spectrum utilization and system capacity. In addition, in a short-range communication application, transmit power of a UWB transmitter may be usually lower than 1 mW (milliwatt). Theoretically, interference generated by a UWB signal is only equivalent to white noise. This facilitates good coexistence between ultra-wideband and narrowband communication. Therefore, the UWB system and a narrowband (narrowband, NB) communication system can operate at the same time without interfering with each other. The method provided in this application may be implemented by a communication apparatus in the wireless communication system. In a communication apparatus, an apparatus or a chip that implements functions of the UWB system may be referred to as a UWB module, and an apparatus or a chip that implements functions of the narrowband communication system may be referred to as a narrowband communication module. The UWB module and the narrowband communication module may be different apparatuses or chips. Certainly, the UWB module and the narrowband communication module may alternatively be integrated into one apparatus or chip. Implementations of the UWB module and the narrowband communication module in the communication apparatus are not limited in embodiments of this application. The communication apparatus in this application includes the UWB module, and may further include the narrowband communication module.

Although embodiments of this application are mainly described by using a WPAN as an example, for example, a network used in IEEE 802.15 series standards is used as an example for description, a person skilled in the art easily understands that, various aspects in this application may be extended to another network using various standards or protocols, for example, a wireless local area network (wireless local area network, WLAN), Bluetooth (Bluetooth), a high performance radio LAN (high performance radio LAN, HIPERLAN) (a wireless standard similar to the IEEE 802.11 standard, mainly used in Europe), a wide area network (WAN), or another network that is currently known or developed in the future. Therefore, regardless of a used coverage area and a used wireless access protocol, various aspects provided in this application are applicable to any appropriate wireless network.

Optionally, the communication apparatus in embodiments of this application may be a device that supports a plurality of WPAN standards, such as 802.15.4a, 802.15.4z, 802.15.4ab under discussion, or a subsequent release.

For example, the method provided in this application may be implemented by a communication apparatus in a wireless communication system, and the communication apparatus may be an apparatus in a UWB system. For example, the communication apparatus may include but is not limited to a communication server, a router, a switch, a bridge, a computer, a mobile phone, or the like that supports the UWB technology. For another example, the communication apparatus may include user equipment (user equipment, UE). The user equipment may include various devices that support the UWB technology, such as handheld devices, vehicle-mounted devices (for example, vehicles or components mounted in vehicles), wearable devices, internet of things (internet of things, IoT) devices, computing devices, or other processing devices connected to wireless modems. Examples are not enumerated herein. For another example, the communication apparatus may include a central control point, for example, a personal area network (personal area network, PAN) or a PAN coordinator. The PAN coordinator or the PAN may be a mobile phone, a vehicle-mounted device, an anchor (Anchor), a tag (tag), a smart home, or the like. For another example, the communication apparatus may include a chip, and the chip may be disposed in a communication server, a router, a switch, a terminal device, or the like. Examples are not enumerated herein.

In embodiments of this application, the communication apparatus may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, a Windows operating system, or the like. The application layer includes applications such as a browser, an address book, word processing software, and instant messaging software. In addition, a specific structure of an execution body of the method provided in embodiments of this application is not specifically limited in embodiments of this application, provided that communication can be performed according to the method provided in embodiments of this application by running a program that records code of the method provided in embodiments of this application.

It may be understood that the foregoing descriptions of the communication apparatus are applicable to any communication apparatus in embodiments of this application.

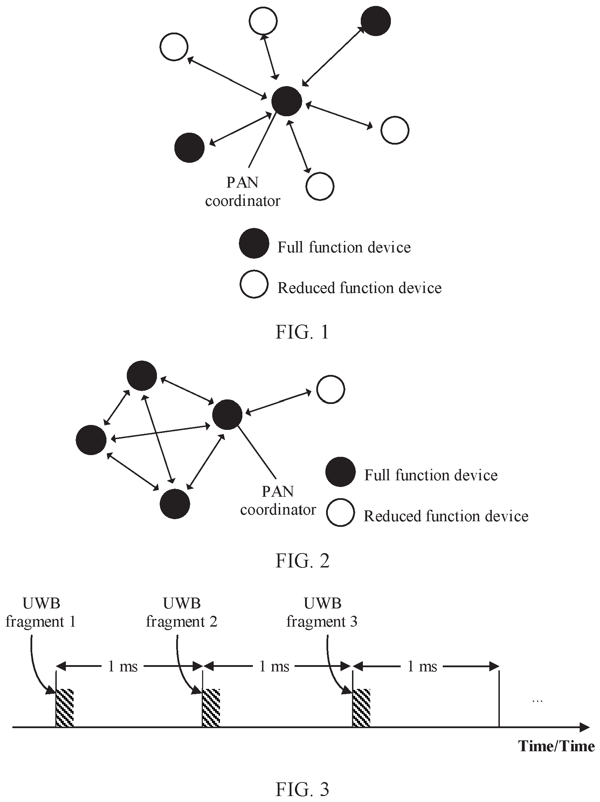

For example, FIG. 1 is a diagram of a structure of a wireless communication system according to an embodiment of this application. As shown in FIG. 1, the wireless communication system is a star topology structure. In this structure, one central control node (for example, a PAN coordinator in FIG. 1) may perform data communication with one or more other devices. FIG. 2 is a diagram of another structure of a wireless communication system according to an embodiment of this application. As shown in FIG. 2, the wireless communication system is a point-to-point topology structure. In this structure, a central control node (for example, a PAN coordinator in FIG. 2) may perform data communication with one or more other devices, and other different devices may also perform data communication with each other. In FIG. 1 and FIG. 2, both a full function device (full function device) and a reduced function device (reduced function device) may be understood as communication apparatuses shown in this application. The full function device is relative to the reduced function device. For example, the reduced function device cannot be a PAN coordinator (coordinator). For another example, compared with the full function device, the reduced function device may have no coordination capability or have a lower communication rate than that of the full function device. It may be understood that the PAN coordinator shown in FIG. 2 is merely an example, and the other three full function devices shown in FIG. 2| may alternatively serve as PAN coordinators. Examples are not enumerated herein. It can be further understood that the full function device and the reduced function device in this application are merely examples of communication apparatuses, and any apparatus that can implement a ranging method provided in this application falls within the protection scope of this application.

The following briefly describes some related content, terms, or nouns in this application.

### 1. Fragmented transmission of a UWB signal

Because an ultra-wideband system has a large bandwidth, to reduce interference to another device when the ultra-wideband system operates, the Federal Communications Commission (FCC) imposes strict restrictions on power spectral density of a UWB signal. According to the Code of Federal Regulations (CFR Code of Federal Regulations), there are mainly the following two rules:

Rule 1: An average value of maximum power spectral density (power spectral density, PSD) of a transmitted UWB signal within 1 millisecond cannot be greater than -41.3 dBm per megahertz.

Rule 2: Maximum power of the transmitted UWB signal within any bandwidth of 50 MHz cannot exceed 1 milliwatt.

Rule 1 limits total transmit energy of the UWB signal within 1 millisecond (not exceeding 37 nJ in a bandwidth of 500 MHz). However, instantaneous power of the transmitted signal can be increased by concentrating the energy within shorter time, thereby increasing a coverage area of the UWB signal and improving a signal-to-noise ratio (signal-to-noise ratio, SNR) of a signal received by a receiver. Based on this, in some scenarios in which transmit power needs to be increased, a UWB signal transmission method is shown in FIG. 3. FIG. 3 is a diagram of fragmented transmission of a UWB signal according to an embodiment of this application. As shown in FIG. 3, a transmitter fragments a to-be-transmitted UWB signal into a plurality of fragments (fragment), a time length of each UWB fragment (UWB fragment) signal is less than 1 millisecond (ms), and only one of the UWB segments is sent within each millisecond.

It may be understood that fragmented transmission can increase instantaneous power of the UWB signal, thereby increasing a coverage area of the UWB signal and increasing a signal-to-noise ratio of a signal received by a receiver.

In this application, a system using a fragmented transmission manner shown in FIG. 3 (for example, a system that performs transmission by using the 802.15.4ab protocol) is referred to as a multi-millisecond UWB system.

### 2. Physical layer protocol data unit (physical layer protocol data unit, PPDU) structure in a UWB system

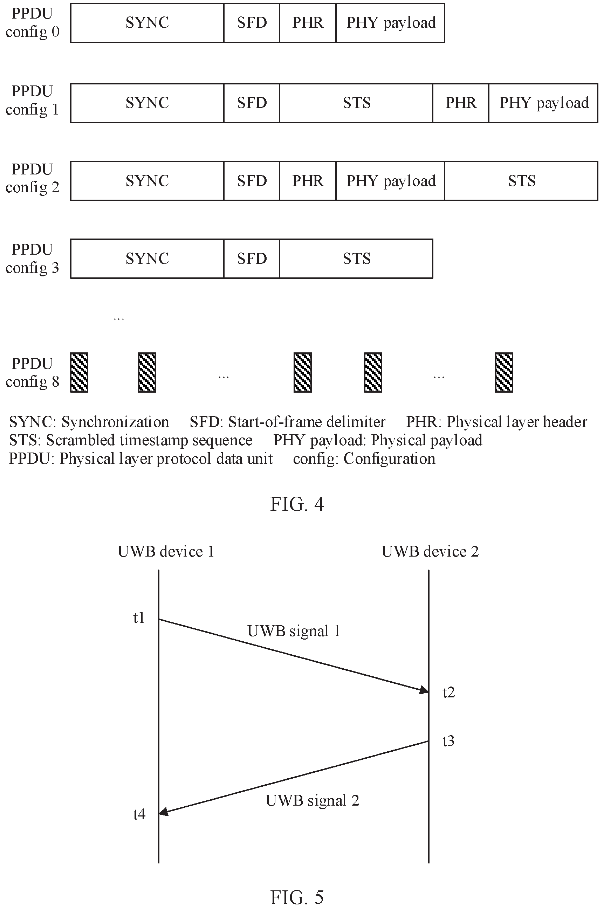

Some PPDU structures defined in the 802.15.4a, 802.15.4z, and 802.15.4ab standards are shown in FIG. 4. FIG. 4 is a possible diagram of a PPDU structure according to an embodiment of this application. FIG. 4 shows five possible PPDU structures. In actual application, there may be more or fewer PPDU structures than those shown in FIG. 4. This is not limited in this application. It may be understood that, because a PPDU configuration 4 (config 4) to a PPDU configuration 7 (config 7) are structures used to implement a sensing function, the configurations are not shown in FIG. 4. As shown in FIG. 4, a PPDU configuration 0 (config 0) to a PPDU configuration 3 (config 3) include one or more of the following: a synchronization (synchronization, SYNC) field, a start-of-frame delimiter (start-of-frame delimiter, SFD) field, a physical layer header (physical layer header, PHR) field, a physical payload field (PHY payload field), or a scrambled timestamp sequence (scrambled timestamp sequence, STS). A receiver may perform PPDU detection and synchronization based on the synchronization (SYNC) field. The synchronization (SYNC) field may include a plurality of repeated symbols, and the symbols may be generated by using a preamble sequence. The synchronization field may be further used to implement a ranging function. The PHR field carries some physical layer indication information, such as modulation and coding information or packet length information, to assist the receiver in correctly demodulating data. The physical payload field may be used to carry data. The scrambled timestamp sequence (STS) may also be used to implement the ranging function.

A PPDU configuration 8 (config 8) is a structure of a multi-millisecond UWB frame defined in the 802.15.4ab standard. Each multi-millisecond UWB frame includes a plurality of UWB fragments (UWB fragment), and the plurality of UWB fragments may form one PPDU. A transmission start time interval between adjacent UWB fragments is 1 millisecond (ms). A PPDU structure of the multi-millisecond UWB frame may include a synchronization (SYNC) field, and may further include a scrambled timestamp sequence (STS). The PPDU structure of the multi-millisecond UWB frame does not include a data part.

### 3. Basic principle of ranging

The basic principle of ranging is as follows: Two communication parties calculate a distance between the two communication parties by measuring round-trip time of a message. A ranging sequence sent by a transmitter arrives at a receiver after being pulse shaped and modulated. The receiver performs a correlation operation on the received ranging sequence and a locally stored sequence, and obtains time of arrival (that is, t2 and t4) based on a location of a correlation peak. FIG. 5 is a diagram of a ranging principle according to an embodiment of this application. As shown in FIG. 5, a UWB device 1 sends a UWB signal 1 at a moment t1, and the UWB signal 1 arrives at a UWB device 2 at a moment t2 after being transmitted through a wireless channel. After processing the received UWB signal, the UWB device 2 sends a UWB signal 2 to the UWB device 1 at a moment t3, and the UWB signal 2 arrives at the UWB device 1 at a moment t4 after being transmitted through a wireless channel. The UWB signal is obtained by performing pulse shaping and modulation, for example, binary phase shift keying (binary phase shift keying, BPSK), on a ranging sequence. The ranging sequence may be a preamble sequence, for example, an Ipatov sequence with a length of 31, 127, or 91. The ranging sequence may alternatively be another sequence, for example, an STS. This is not limited in this application.

A distance d between the UWB device 1 and the UWB device 2 may be calculated according to the following formulas (1-1), (1-2), and (1-3): $d = \frac{\left({t}_{RTT}-{t}_{reply}\right)}{2} \times c$ ${t}_{RTT} = \left(t4-t1\right)$ ${t}_{reply} = \left(t3-t2\right)$

c represents a speed of light.

It should be understood that, when a signal is transmitted on a wireless channel, the signal is reflected, diffracted, scattered, and the like by various obstacles, and is also affected by various noise. Consequently, when a signal sent by the transmitter arrives at the receiver, a waveform of the signal changes, but information or content carried by the signal does not change.

### 4. Multi-millisecond ranging

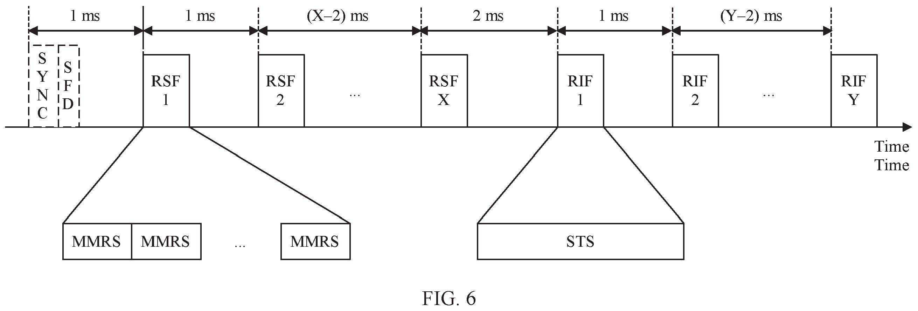

In a possible implementation, signal transmission in multi-millisecond ranging is shown in FIG. 6. FIG. 6 is a diagram of signal transmission in multi-millisecond ranging according to an embodiment of this application. UWB fragments are classified into two types: ranging sequence fragments (ranging sequence fragment, RSF) and ranging integrity fragments (ranging integrity fragment, RIF). One PPDU may include an RSF, may include an RIF, or may include both an RSF and an RIF. For example, as shown in FIG. 6, the PPDU may further include a SYNC or an SFD.

As shown in FIG. 6, the PPDU includes X RSFs, all the RSFs have a same length, and a transmission start time interval between two adjacent RSFs is 1 millisecond (ms). Each RSF may include multi-millisecond ranging symbol (Multi-millisecond ranging symbol, MMRS) repetitions (MMRS symbol repetitions, MSR) multi-millisecond ranging symbols (MMRS). As shown in FIG. 6, the PPDU further includes Y RIFs, all the RIFs have a same length, and a transmission start time interval between two adjacent RIFs is 1 millisecond (ms). Each RIF may include several STSs. When RSFs and RIFs exist in a PPDU, a transmission start time interval between a last RSF and a first RIF is 2 milliseconds. In addition, all the RSFs and RIFs are transmitted on a same UWB channel.

### 5. Frequency stitching

Currently, limited by performance of ADCs, most UWB devices are incapable of processing high-bandwidth signals. However, ranging performance is directly proportional to an effective bandwidth, that is, a larger effective bandwidth indicates higher ranging accuracy. Therefore, a possible solution to improve ranging performance of the UWB devices is through frequency stitching. Frequency stitching may be simply described as follows: A transmitter uses a plurality of different frequency bands to transmit a plurality of (ranging) fragments (fragment) /packets (packet), where different fragments/packets may be transmitted on different frequency bands; and a receiver separately receives the fragments/packets on these frequency bands, and performs ranging based on the received plurality of fragments/packets. This is equivalent to stitching the plurality of frequency bands, and performing ranging on the stitched frequency bands. Therefore, ranging performance of the UWB devices can be improved.

In terms of time, frequency stitching may be classified into two types. One type is intra-packet frequency stitching, that is, different parts in a physical layer protocol data unit (physical layer protocol data unit, PPDU) are transmitted on different UWB channels (or frequency bands). The other type is inter-packet frequency stitching, that is, a plurality of different PPDUs are transmitted on different UWB channels (or frequency bands).

In this application, a "PPDU" may be referred to as a "packet (packet)", and the two may be used interchangeably. In this application, a "frequency band" and a "channel" may be used interchangeably.

A plurality of channels for frequency stitching may or may not overlap. Overlapped frequency bands/channels help track a phase during stitching, and improve accuracy of a channel impulse response (channel impulse response, CIR) on an effective channel after stitching. Channel transmission order in existing frequency stitching may be classified into two types. One type is: using channels in out-of-sequence order (out-of-sequence channel order), referred to as out-of-sequence channel order for short. The other type is: using channels in in-sequence order (in-sequence channel order), referred to as in-sequence channel order for short.

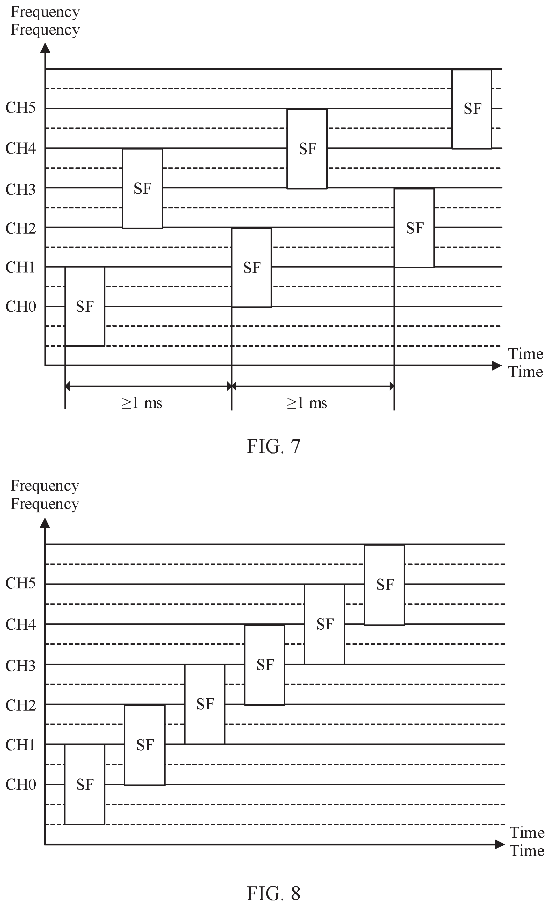

FIG. 7 is a diagram of out-of-sequence channel order according to an embodiment of this application. As shown in FIG. 7, a characteristic of the existing out-of-sequence channel order is that adjacent transmission channels (for example, CH0 and CH3 in FIG. 7) do not overlap in frequency domain, and a signal start transmission interval between channels that overlap in frequency domain (for example, CH0 and CH1 in FIG. 7) needs to be greater than or equal to 1 ms (millisecond). According to a transmission power requirement of a UWB signal, maximum average power per millisecond and per megahertz bandwidth is -41.3 dBm (that is, the foregoing Rule 1). If a transmission interval between channels that overlap in frequency domain is greater than or equal to 1 ms, each fragment/packet can be transmitted at allowed maximum average power.

A channel transmission order of the out-of-sequence channel order may be obtained through calculation according to the following formula (1-4): $CH \left(\left(p*\left(OF+1\right)MOD \left(N\right)\right)+\left(p*\left(OF+1\right)DIV\left(N\right)\right)\right)$

Values of p are respectively 0, 1, 2, ..., and (N-1). OF represents an overlapping factor (overlapping factor, OF). When there is no overlap between adjacent channels, OF is equal to 0. When a frequency overlap rate between adjacent channels is 25%, OF is equal to 1. When a frequency overlap rate between adjacent channels is 50%, OF is equal to 2. When a frequency overlap rate between adjacent channels is 75%, OF is equal to 3. If a total number K of channels (frequency bands) used for frequency stitching is an integer multiple of (OF+1), N is equal to K. If a total number K of channels (frequency bands) used for frequency stitching is not an integer multiple of (OF+1), N is the smallest integer multiple of (OF+1) in positive integers greater than K. For example, if K is equal to 6, and it is assumed that OF is equal to 2 (that is, a frequency overlap rate is 50%), because K can be divisible by (OF+1)=3, N is equal to K, that is, 6. If it is assumed that OF is equal to 3 (that is, a frequency overlap rate is 75%), because K cannot be divisible by (OF+1)=4, N is equal to 8. It may be understood that, if N is greater than K (that is, a value of K cannot be divisible by (OF+1)), additionally added channels (that is, CH(K), CH(K+1), ..., CH(N-1)) are not actually used, and the transmitter does not transmit UWB pulses on the additionally added channels.

MOD represents a modulo operation, and DIV represents integer division. Details are not described below again. For integer division (DIV), x DIV y is equal to an integer part of a quotient of x divided by y. For example, if x is equal to 4 and y is equal to 6, x DIV y=0. For another example, if x is equal to 8 and y is equal to 6, x DIV y=1.

FIG. 8 is a diagram of in-sequence channel order according to an embodiment of this application. As shown in FIG. 8, a feature of the in-sequence channel order is that transmission is sequentially performed on different channels in ascending or descending order of center frequencies. FIG. 8 shows in-sequence channel order in a case of a frequency overlap rate of 50%. It may be understood that because there is no limitation that a signal start transmission interval between channels that overlap in frequency domain needs to be greater than 1 ms in the in-sequence channel order, total transmission time for the in-sequence channel order may be less than 1 ms. Certainly, the total transmission time for the in-sequence channel order may alternatively be greater than 1 ms or equal to 1 ms. This is not limited in embodiments of this application.

Unless otherwise specified, a "channel" mentioned in this application refers to a UWB channel. For example, a bandwidth of the UWB channel is 499.2 MHz.

It can be learned from the foregoing content that frequency stitching helps improve ranging accuracy, but how to further improve ranging performance still needs to be explored.

Embodiments of this application provide a ranging method, an apparatus, and a readable storage medium, to not only improve ranging accuracy, but also reduce time required for ranging, thereby improving ranging efficiency.

The following describes in detail the technical solutions provided in this application with reference to more accompanying drawings.

In this application, unless otherwise specified, for same or similar parts in embodiments or implementations, refer to each other. In embodiments of this application and the implementations/methods/implementation methods in the embodiments, unless otherwise specified or unless a logical conflict occurs, terms and/or descriptions are consistent and may be mutually referenced between different embodiments and between the implementations/methods/implementation methods in the embodiments. Technical features in the different embodiments and the implementations/methods/implementation methods in the embodiments may be combined to form a new embodiment, implementation, method, or implementation method based on an internal logical relationship thereof. The following implementations of this application are not intended to limit the protection scope of this application. It may be understood that a sequence of the following embodiments does not represent a degree of importance.

A communication apparatus in this application may support the 802.15 series protocols, such as the 802.15.4ab standard or a next-generation standard of 802.15.4ab, may also support other IEEE standard protocols (for example, the 802.11 series protocols), and a plurality of wireless local area network (wireless local area network, WLAN) standards of the 802.11 family such as 802.11ax, 802.11ac, 802.11n, 802.11g, 802.11b, 802.11a, 802.11be, and next-generation standards of 802.11be (for example, Wi-Fi 8, ultra high reliability (ultra high reliability, UHR), and 11bn), and may further support sensing protocols such as 802.11bf.

In a possible implementation, the method provided in this application may be applied to a unidirectional/bidirectional ranging scenario between one node and one node, may be applied to a unidirectional/bidirectional ranging scenario between one node and a plurality of nodes, and may be further applied to a unidirectional/bidirectional ranging scenario between a plurality of nodes and a plurality of nodes. This is not limited in this application.

A "ranging fragment" in this application may be a UWB fragment used for ranging, for example, an RSF or a RIF. Certainly, with development and evolution of standards, there may be more fragments that can be used for ranging. A "ranging packet" in this application may be any structure of the PPDU configuration 0 to the PPDU configuration 3 shown in FIG. 4. Certainly, with development and evolution of standards, there may be more PPDU structures of ranging packets.

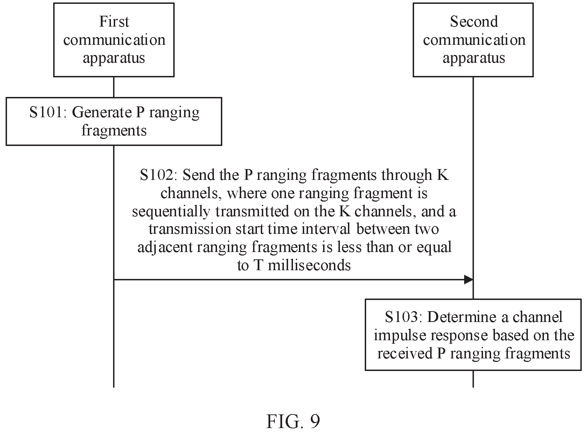

FIG. 9 is a schematic flowchart of a ranging method according to an embodiment of this application. A first communication apparatus and a second communication apparatus in the method may be any two devices that can perform data communication in FIG. 1 or FIG. 2. In a possible implementation, the first communication apparatus in the method may be used as an initiator (initiator), and the second communication apparatus may be used as a responder (responder). Certainly, the first communication apparatus may alternatively be used as a responder (responder), and the second communication apparatus may be used as an initiator (initiator). This is not limited in embodiments of this application.

As shown in FIG. 9, the ranging method includes but is not limited to the following steps:

S101: The first communication apparatus generates P ranging fragments.

S102: The first communication apparatus sends the P ranging fragments to a second communication apparatus through K channels, where one ranging fragment is sequentially transmitted on the K channels, and a transmission start time interval between two adjacent ranging fragments is less than or equal to T milliseconds. For example, T is equal to 1. For another example, if an average value of maximum power spectral density (PSD) of a UWB signal within a milliseconds does not exceed a threshold, T is equal to a. K is an integer greater than 1, and P is greater than or equal to K.

In a possible implementation, the K channels may be used for frequency stitching (Frequency Stitching), and K may be an integer greater than 1. A channel transmission order of the K channels may be: sequentially using the K channels in ascending or descending order of center frequencies, that is, in-sequence channel order (in-sequence channel order). Alternatively, the channel transmission order of the K channels may be: skipping sequentially using the K channels in ascending or descending order of center frequencies. In other words, the channel transmission order of the K channels may be: using the K channels in the ascending or descending order of the center frequencies in a non-sequential manner, that is, out-of-sequence channel order (out-of-sequence channel order). The channel transmission order of the out-of-sequence channel order may be specifically obtained according to the foregoing formula (1-4).

In a possible implementation, the P ranging fragments may be all RSFs or RIFs. In this case, P is equal to K, and one ranging fragment (an RSF or an RIF) is transmitted on each channel, and K (equal to P) ranging fragments are sequentially transmitted on the K channels. It may be understood that, because there is transmission order between the K channels, sequentially transmitting on the K channels may be understood as follows: sequentially using the K channels in ascending or descending order of center frequencies, or skipping sequentially using the K channels in ascending or descending order of center frequencies. Details are not described below again.

In another possible implementation, the P ranging fragments may include P1 RSFs and (P-P1) RIFs. In this case, P is greater than K, P1 is a positive integer less than or equal to K, and (P-P1) is also a positive integer less than or equal to K. In addition, P1 is equal to K, or (P-P1) is equal to K. The P1 RSFs are sequentially transmitted on the K channels, and one RSF is transmitted on one channel. Then, the (P-P1) RIFs are sequentially transmitted on the K channels, and one RIF is transmitted on one channel. For example, P is equal to 10, P1 is equal to K and is equal to 6, and (P-P1) is equal to 4. For the P1(=6) RSFs, one RSF is transmitted on each of the K(=6) channels, and the K channels are used in the channel transmission order of the in-sequence channel order or the out-of-sequence channel order. In this case, a channel for transmitting a first RSF is a base channel (base channel). For the (P-P1)=4 RIFs, one RIF is transmitted on one channel, and different RIFs are transmitted on different channels. The (P-P1)=4 RIFs are transmitted on four channels (for example, the first four channels in the channel transmission order) of the K(=6) channels, and a channel for transmitting a first RIF is a base channel. For another example, P is equal to 10, P1 is equal to 4, and (P-P1) is equal to K and is equal to 6. For the P1(=4) RSFs, one RSF is transmitted on one channel, and different RSFs are transmitted on different channels. The P1(=4) RSFs are transmitted on four channels (for example, the first four channels in the channel transmission order) of the K(=6) channels, and a channel for transmitting a first RSF is a base channel. For the (P-P1)=6 RIFs, one RIF is transmitted on each of the K(=6) channels, and the K channels are used in the channel transmission order of the in-sequence channel order or the out-of-sequence channel order. In this case, a channel for transmitting a first RIF is a base channel. For another example, P is equal to 12, P1 is equal to 6, (P-P1) is also equal to 6, and K is equal to 6. That is, P1, (P-P1), and K are equal. For the P1 RSFs, one RSF is transmitted on each of the K(=6) channels, and the K channels are used in the channel transmission order of the in-sequence channel order or the out-of-sequence channel order. In this case, a channel for transmitting a first RSF is a base channel. For the (P-P1) RIFs, one RIF is transmitted on each of the K(=6) channels, and the K channels are used in the channel transmission order of the in-sequence channel order or the out-of-sequence channel order. In this case, a channel for transmitting a first RIF is a base channel.

In short, when P is greater than K, or when the P ranging fragments include both RSFs and RIFs, some of the K channels may be used for a plurality of times (for example, twice), and the other channels are used once. Alternatively, all of the K channels may be used for a plurality of times (for example, twice). In other words, when the P ranging fragments include both RSFs and RIFs, the RSFs and the RIFs may be separately used starting from a base channel (base channel) of frequency stitching. Alternatively, the RSFs and the RIFs may be separately understood as one-time frequency stitching.

The "base channel" in this application may be a first channel used for frequency stitching.

In a possible implementation, the channel transmission order of the K channels is: sequentially using the K channels in the ascending or descending order of the center frequencies. When there is no (frequency) overlap between the K channels, or when an overlap rate between two adjacent channels in the K channels is 25%, the transmission start time interval between the two adjacent ranging fragments may be less than T milliseconds. When an overlap rate between two adjacent channels in the K channels is 50% or 75%, the transmission start time interval between the two adjacent ranging fragments may be equal to T milliseconds. In another possible implementation, the channel transmission order of the K channels is: skipping sequentially using the K channels in the ascending or descending order of the center frequencies, or using the K channels in the ascending or descending order of the center frequencies in a non-sequential manner. Regardless of whether there is an overlap between the K channels or what an overlap rate is, the transmission start time interval between the two adjacent ranging fragments may be less than T milliseconds. For example, T is equal to 1.

It may be understood that, for the in-sequence channel order (in-sequence channel order), when an overlap rate between two adjacent channels is 25%, maximum combined power spectral density (PSD) of two UWB signals (for example, ranging fragments) on the adjacent channels within 1 millisecond does not exceed -41.3 dBm per megahertz. However, when an overlap rate between two adjacent channels is 50% or 75%, maximum combined power spectral density (PSD) of two UWB signals (for example, ranging fragments) on the adjacent channels within 1 millisecond exceeds -41.3 dBm per megahertz. Therefore, when the channel transmission order of the K channels is: sequentially using the K channels in the ascending or descending order of the center frequencies, if two adjacent channels do not overlap or an overlap rate between the two adjacent channels is 25%, the transmission start time interval between the two adjacent ranging fragments may be less than 1 millisecond. In this way, each ranging fragment can be transmitted at allowed maximum average power (maximum average power per millisecond and per megahertz bandwidth is -41.3 dBm), and a time interval between ranging fragments can be reduced, thereby reducing time required for ranging and improving ranging efficiency. When the channel transmission order of the K channels is: sequentially using the K channels in the ascending or descending order of the center frequencies, if an overlap rate between two adjacent channels is 50% or 75%, the transmission start time interval between the two adjacent ranging fragments may be equal to 1 millisecond. In this way, each ranging fragment can be transmitted at allowed maximum average power (maximum average power per millisecond and per megahertz bandwidth is -41.3 dBm), so that instantaneous power of the ranging fragment can be improved, thereby increasing a coverage area and improving a signal-to-noise ratio of a signal received by a receiver. For a manner of using channels in out-of-sequence channel order (out-of-sequence channel order), two adjacent channels in transmission do not overlap in frequency domain. Therefore, when the channel transmission order of the K channels is: using the K channels in the ascending or descending order of the center frequencies in a non-sequential manner, the transmission start time interval between the two adjacent ranging fragments may be less than 1 millisecond.

The "two adjacent ranging fragments" may be ranging fragments of a same type, for example, both are RSFs or RIFs.

It may be understood that when there is another limitation on PSD of a UWB signal, T may alternatively have another value. This is not limited in embodiments of this application. For example, if an average value of maximum power spectral density (PSD) of a UWB signal within a milliseconds does not exceed a threshold, T is equal to a. For ease of understanding, the following uses an example in which T is equal to 1 for description.

It may be further understood that the "transmission start time interval" in this embodiment of this application is in a unit of millisecond (ms). In actual application, the transmission start time interval may alternatively be in a unit of ranging schedule time unit (ranging schedule time unit, RSTU). For example, a conversion relationship between a millisecond (ms) and an RSTU may be as follows: 1200 RSTUs are equal to 1 ms, and 600 RSTUs are equal to 0.5 ms.

In a possible implementation, when the P ranging fragments include both RSFs and RIFs, a transmission start time interval between a last RSF and a first RIF is a preset value, for example, 2 milliseconds or 2400 RSTUs.

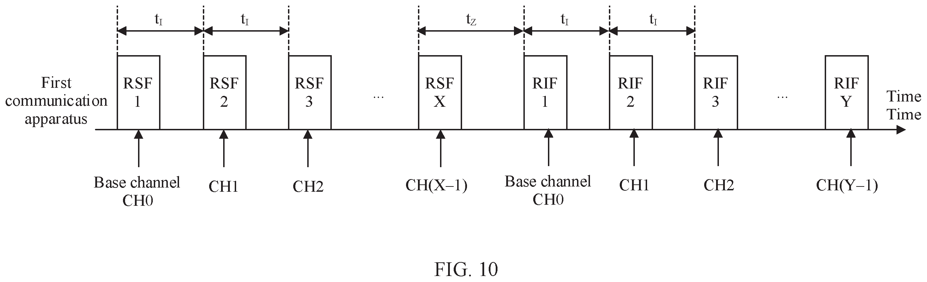

For example, FIG. 10 is a diagram of a transmission start time interval between ranging fragments according to an embodiment of this application. The first communication apparatus may be an initiator (initiator), or may be a responder (responder). The first communication apparatus sends X RSFs and Y RIFs in total through the K channels. One RSF/RIF is transmitted on one channel, different RSFs are transmitted on different channels, and different RIFs are transmitted on different channels. Both X and Y are positive integers less than or equal to K, and X is equal to K, or Y is equal to K. It is assumed that a base channel of the K channels is CH0, and the channel transmission order of the K channels is CH0, CH1, CH2, ..., and CH(K-1). As shown in FIG. 10, an RSF 1 is transmitted on the base channel (CH0), an RSF 2 is transmitted on the channel CH1, an RSF 3 is transmitted on the channel CH2, the rest may be deduced by analogy, and an RSF X is transmitted on a channel CH(X-1); and an RIF 1 is transmitted on the base channel (CH0), an RIF 2 is transmitted on the channel CH1, an RIF 3 is transmitted on the channel CH2, the rest may be deduced by analogy, and an RIF Y is transmitted on a channel CH(Y-1).

As shown in FIG. 10, a transmission start time interval between two adjacent RSFs is t_{I}, a transmission start time interval between two adjacent RIFs is also t_{I}, and a transmission start time interval between a last RSF (for example, the RSF X in FIG. 10) and a first RIF (for example, the RIF 1 in FIG. 10) is t_{Z}. t_{I} may be less than or equal to 1 millisecond, and t_{Z} may be less than or equal to 2 milliseconds.

For example, when the channel transmission order of the K channels is: sequentially using the K channels in the ascending or descending order of the center frequencies, if a frequency overlap rate between the channels is 25% or there is no overlap, t_{I} may be less than 1 millisecond; or if a frequency overlap rate between the channels is 50% or 75%, t_{I} may be equal to 1 millisecond. When the channel transmission order of the K channels is: skipping sequentially using the K channels in the ascending or descending order of the center frequencies, t_{I} may be less than 1 millisecond.

For example, when t_{I} is equal to 1 millisecond, t_{Z} may be equal to 2 milliseconds. When t_{I} is less than 1 millisecond, t_{Z} may be equal to C*t_{I}, that is, t_{Z}=C×t_{I}, where C is a constant, and C may be equal to 2. Alternatively, when t_{I} is less than 1 millisecond, t_{Z} may be equal to (t_{I}+1). Alternatively, regardless of a value of t_{I}, t_{Z} may be fixed at 2 milliseconds. In other words, t_{Z} and t_{I} may be decoupled.

In a possible implementation, a value of t_{I} or t_{Z} in FIG. 10 may be determined through signaling interaction between a receiver and a transmitter. For details, refer to the following descriptions in the embodiments. Details are not described herein. Alternatively, the value of t_{I} or t_{Z} may be agreed on in a standard protocol. For example, the value of t_{I} is learned through signaling interaction between the receiver and the transmitter, and the value of t_{Z} is agreed on in a standard protocol. This is not limited in embodiments of this application.

It may be understood that FIG. 10 is merely an example. In actual application, the first communication apparatus may send only RSFs or send only RIFs. This is not limited in embodiments of this application.

It may be understood that the ranging method in this embodiment of this application may be applied to a unidirectional ranging scenario or a bidirectional ranging scenario. When the ranging method in this embodiment of this application is applied to the bidirectional ranging scenario, both an initiator and a responder send ranging fragments, and the number of ranging fragments sent by the initiator is equal to the number of ranging fragments sent by the responder. In the bidirectional ranging scenario, there are two ranging fragment transmission manners. One is an interlaced manner (interlaced manner), and the other is a serial manner. In interlaced transmission, the initiator sends a ranging fragment, the responder returns a ranging fragment, then the initiator sends a next ranging fragment, and the responder returns a ranging fragment. The rest may be deduced by analogy. In serial transmission, after the initiator sends a last ranging fragment, the responder sends a first ranging fragment.

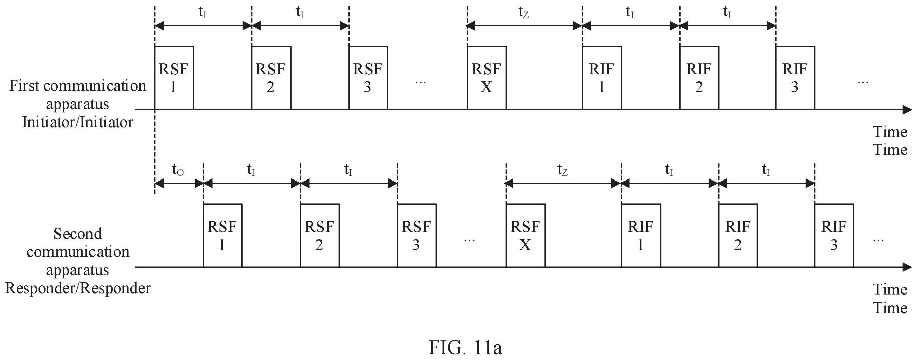

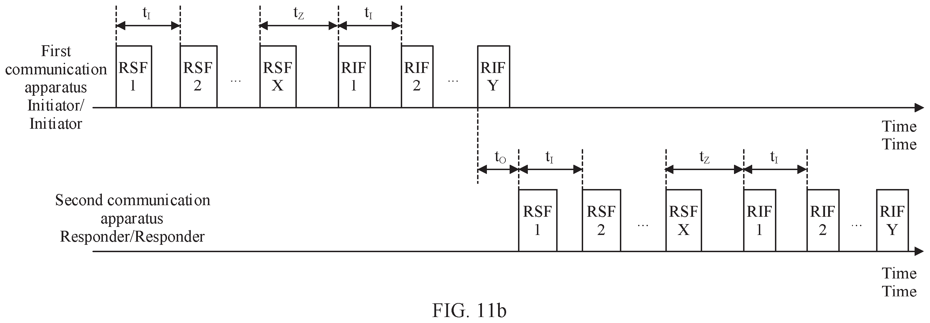

In a possible implementation, for interlaced transmission, a transmission start time interval to between a first ranging fragment sent by the first communication apparatus and a first ranging fragment sent by the second communication apparatus is less than or equal to 0.5 milliseconds. For serial transmission, a transmission start time interval to between a last ranging fragment sent by the first communication apparatus and a first ranging fragment sent by the second communication apparatus is less than or equal to 0.5 milliseconds. For example, FIG. 11a is a diagram of interlaced transmission according to an embodiment of this application. FIG. 11b is a diagram of serial transmission according to an embodiment of this application. FIG. 11a and FIG. 11b use an example in which the first communication apparatus is an initiator and the second communication apparatus is a responder. As shown in FIG. 11a and FIG. 11b, for ranging fragments sent by a device, a transmission start time interval between two adjacent RSFs or two adjacent RIFs is t_{I}, and a transmission start time interval between a last RSF and a first RIF is tz. For descriptions of t_{I} and t_{Z}, refer to the foregoing descriptions. Details are not described herein again. In FIG. 11a, a transmission start time interval between a first RSF sent by the first communication apparatus (initiator) and a first RSF sent by the second communication apparatus (responder) is to. In FIG. 11b, a transmission start time interval between a last RIF sent by the first communication apparatus (initiator) and a first RSF sent by the second communication apparatus (responder) is to.

When t_{I} is equal to 1 millisecond, to may be equal to 0.5 milliseconds (or 600 RSTUs). When t_{I} is less than 1 millisecond, to may be less than 0.5 milliseconds. For example, t_{O}=B*t_{I}, where the symbol "*" represents a "multiplication" or "multiplied by" operation, B is a constant, and B may be (1/2). That is, to may satisfy the following formula (2-1): ${t}_{o} = \frac{1}{2} {t}_{I}$

t_{I} represents the transmission start time interval between the two adjacent ranging fragments (for example, two adjacent RSFs or two adjacent RIFs).

In a possible implementation, a value of to in FIG. 11a and FIG. 11b may be determined through signaling interaction between a transceiver and a receiver. For details, refer to the following descriptions in the embodiments. Details are not described herein. Alternatively, the value of to may be agreed in a standard protocol, or may be obtained by using the foregoing formula (2-1). This is not limited in embodiments of this application.

It may be understood that FIG. 11a and FIG. 11b are merely examples. In actual application, the initiator and the responder may send only RSFs or send only RIFs. This is not limited in embodiments of this application.

It may be further understood that, because it takes time to transmit a ranging fragment between the first communication apparatus and the second communication apparatus, the time is referred to as one-way flight time (a value of the one-way flight time is related to a distance between the first communication apparatus and the second communication apparatus). Therefore, for interlaced transmission, a start time interval between a first ranging fragment sent by the first communication apparatus and a first ranging fragment received by the first communication apparatus is less than or equal to (0.5 ms+one-way flight time). For serial transmission, a start time interval between a last ranging fragment sent by the first communication apparatus and a first ranging fragment received by the first communication apparatus is less than or equal to (0.5 ms+one-way flight time).

In a possible implementation, the transmission start time interval (t_{I}) between the two adjacent ranging fragments (for example, two adjacent RSFs or two adjacent RIFs) may be greater than or equal to a value. For ease of description, the value is denoted as tₘᵢₙ. In other words, t_{I} may be greater than or equal to tₘᵢₙ, and less than or equal to 1 millisecond, that is, tₘᵢₙ≤t_{I}≤1 ms. It may be understood that, because the two adjacent ranging fragments in this embodiment of this application are transmitted by using different channels, at least time for channel switching needs to be considered for tₘᵢₙ. For example, tₘᵢₙ may be determined based on the time for channel switching and a length of a ranging fragment. For example, tₘᵢₙ is equal to a sum of the time for channel switching and the length of the ranging fragment (represented in a time unit). For example, tₘᵢₙ may be determined based on the time for channel switching, the length of the ranging fragment, flight time between the initiator and the responder, processing time of a channel impulse response (CIR), receive-transmit (Rx-Tx) switching time, or the like. The time for channel switching may be a fixed time interval, and the time interval may be in a unit of duration of a preamble (preamble) symbol. Certainly, the time interval may alternatively be in a unit of duration of another symbol, for example, in a unit of duration of an MMRS. This is not limited in embodiments of this application. For example, if duration of one preamble symbol is T_{psym}, the time for channel switching may be represented as A*T_{psym}. The symbol "*" represents a "multiplication" or "multiplied by" operation. Same expressions in the following represent same meanings. Details are not described again. A is a constant, for example, A is equal to 40.

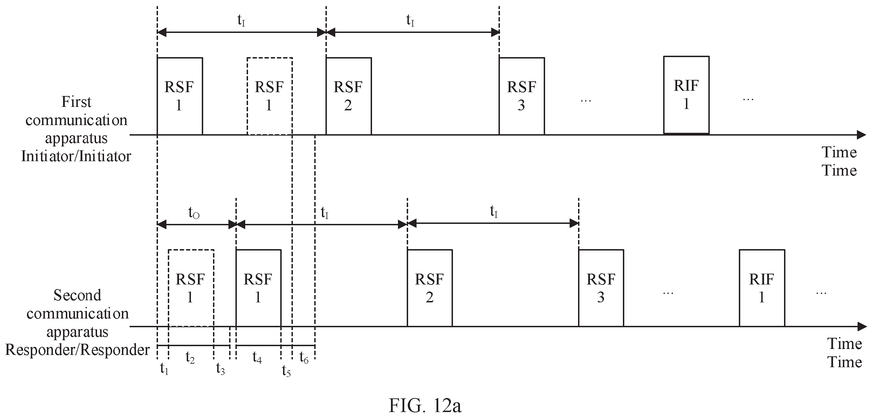

For example, the first communication apparatus is an initiator, and the second communication apparatus is a responder. FIG. 12a is a diagram of tₘᵢₙ in interlaced transmission according to an embodiment of this application. As shown in FIG. 12a, tₘᵢₙ=t₁+t₂+t₃+t₄+t₅+t₆, where t_{I} may be greater than or equal to tₘᵢₙ. t₁ is equal to t₅, indicating one-way flight time between the initiator and the responder. It may be understood that when a distance between the initiator and the responder is 100 meters, corresponding one-way flight time is 0.33 microseconds. Therefore, during short-range ranging (for example, less than or equal to 100 meters), t₁ and t₅ may be ignored, or may be equal to duration T_{psym} of one preamble symbol. t₂ represents a length of a ranging fragment of the initiator, and t₄ represents a length of a ranging fragment of the responder. Generally, the two (t₂ and t₄) are equal. When the ranging fragment is an RSF, t₂=t₄=N_{MSR}*T_{psym}. N_{MSR} represents the number of repetitions of a multi-millisecond ranging symbol (MMRS) in one RSF. When the ranging fragment is an RIF, t₂=t₄=(Number of STS segments in one RIF)*512Tc. Tc represents time of one chip, and Tc is equal to a reciprocal of a bandwidth, that is, Tc=(1/bandwidth). t₃ represents processing time of a channel impulse response (CIR) and receive-transmit (Rx-Tx) switching time. Because processing of the channel impulse response and receive-transmit (Rx-Tx) switching can be performed synchronously, and the receive-transmit (Rx-Tx) switching time is much longer than the processing time of the CIR, t₃ may be equal to (aTurnaroundTime*T_{psym}). aTurnaroundTime is a physical layer constant, and represents Rx-Tx switching time at a physical layer. t₆ represents the receive-transmit (Rx-Tx) switching time and time for channel switching. t₆=(aTurnaroundTime+A)*T_{psym}. For example, A is equal to 40.

Correspondingly, a transmission start time interval to between a first ranging fragment sent by the first communication apparatus and a first ranging fragment sent by the second communication apparatus may also be greater than or equal to a value. As shown in FIG. 12a, to may be greater than or equal to (t₁+t₂+t₃). In other words, a minimum value of to may be determined based on the one-way flight time between the initiator and the responder, the length of the ranging fragment, the processing time of the channel impulse response (CIR), and the receive-transmit (Rx-Tx) switching time. For example, to may alternatively be less than or equal to (t_{I}-t₄-t₅-t₆).

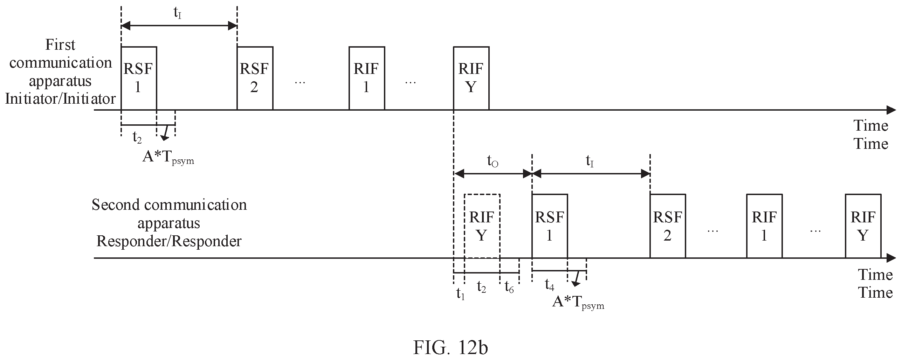

FIG. 12b is a diagram of tₘᵢₙ in serial transmission according to an embodiment of this application. As shown in FIG. 12b, tₘᵢₙ=A*T_{psym}+t₂. t₂ represents a length of a ranging fragment of the initiator. t₄ represents a length of a ranging fragment of the responder. Generally, the two (t₂ and t₄) are equal. Correspondingly, a transmission start time interval to between a last ranging fragment sent by the first communication apparatus and a first ranging fragment sent by the second communication apparatus may also be greater than or equal to a value. As shown in FIG. 12b, to may be greater than or equal to (t₁+t₂+t₆). t₁ represents one-way flight time between the initiator and the responder. For details, refer to the foregoing descriptions. Details are not described herein again. t₂ represents the length of the ranging fragment of the initiator. For details, refer to the foregoing descriptions. Details are not described herein again. t₆ represents receive-transmit (Rx-Tx) switching time and time for channel switching. For details, refer to the foregoing descriptions. Details are not described herein again.

It may be understood that FIG. 12a and FIG. 12b are merely examples. In actual application, the initiator and the responder may send only RSFs or send only RIFs. This is not limited in embodiments of this application.

S103: The second communication apparatus determines a channel impulse response based on the received P ranging fragments.

In a possible implementation, the second communication apparatus sequentially receives the P ranging fragments through the K channels. It may be understood that a manner in which the second communication apparatus receives the P ranging fragments through the K channels is the same as a manner in which the first communication apparatus sends the P ranging fragments through the K channels. As shown in FIG. 10, the first communication apparatus sends the RSF 1 on the base channel CH0, and the second communication apparatus also receives the RSF 1 on the base channel CH0; and the first communication apparatus sends the RSF 2 on the channel CH1, and the second communication apparatus also receives the RSF 2 on the channel CH1. The rest may be deduced by analogy. The second communication apparatus may calculate one channel impulse response each time the second communication apparatus receives one ranging fragment, then combine P channel impulse responses corresponding to the P ranging fragments into one channel impulse response, and determine receiving timestamp information based on the channel impulse response. The second communication apparatus may further feed back the receiving timestamp information to the first communication apparatus, so that the first communication apparatus determines the distance between the first communication apparatus and the second communication apparatus based on the receiving timestamp information. For example, in a measurement report (measurement report) phase, if ranging information (for example, the receiving timestamp information) is exchanged by using a UWB channel, the second communication apparatus may feed back the receiving timestamp information to the first communication apparatus by using a base channel or a channel for transmitting a last ranging fragment. In this way, the number of times of channel switching can be reduced.

In this embodiment of this application, frequency stitching is used in a multi-millisecond ranging process, and one RSF or one RIF is transmitted on one channel, so that ranging accuracy can be improved. In addition, when the in-sequence channel order is used, if a frequency overlap rate between channels is 25% or there is no overlap, the transmission start time interval between the two adjacent ranging fragments is allowed to be less than 1 millisecond. In addition, when the out-of-sequence channel order is used, the transmission start time interval between the two adjacent ranging fragments may also be less than 1 millisecond. In this way, an interval between fragments can be reduced, thereby reducing time required for ranging and improving ranging efficiency.

The ranging method shown in FIG. 9 is described by using ranging fragments (for example, RSFs or RIFs) as an example. Certainly, the ranging method provided in this embodiment of this application may alternatively be implemented by using ranging packets (ranging packet). In an optional embodiment, for the ranging packets (or ranging PPDUs), P is equal to K. In other words, step S101 and step S102 shown in FIG. 9 may be understood as follows: The first communication apparatus generates K ranging packets, and sends the K ranging packets to the second communication apparatus through K channels, where one ranging packet is transmitted on each of the K channels, and a transmission start time interval between two adjacent ranging packets is less than or equal to T milliseconds. For example, T is equal to 1. For another example, if an average value of maximum power spectral density (PSD) of a UWB signal within a milliseconds does not exceed a threshold, T is equal to a. For ease of understanding, the following uses an example in which T is equal to 1 for description. Correspondingly, step S103 shown in FIG. 9 may be understood as follows: The second communication apparatus determines a channel impulse response based on the received P ranging packets.

The K channels may be used for frequency stitching, and K is an integer greater than 1.

For example, a channel transmission order of the K channels is: sequentially using the K channels in ascending or descending order of center frequencies. When there is no (frequency) overlap between the K channels, or an overlap rate between two adjacent channels in the K channels is 25%, the transmission start time interval (t_{I}) between the two adjacent ranging packets may be less than 1 millisecond. When an overlap rate between two adjacent channels in the K channels is 50% or 75%, the transmission start time interval (t_{I}) between the two adjacent ranging packets may be equal to 1 millisecond. For another example, the channel transmission order of the K channels is: skipping sequentially using the K channels in ascending or descending order of center frequencies, or using the K channels in ascending or descending order of center frequencies in a non-sequential manner. In this case, the transmission start time interval (t_{I}) between the two adjacent ranging packets may be less than 1 millisecond. For a specific implementation of t_{I}, refer to the foregoing descriptions. Details are not described herein again.

For example, for interlaced transmission, a transmission start time interval t_{O} between a first ranging packet sent by the first communication apparatus and a first ranging packet sent by the second communication apparatus is less than or equal to 0.5 milliseconds. For serial transmission, a transmission start time interval t_{O} between a last ranging packet sent by the first communication apparatus and a first ranging packet sent by the second communication apparatus is less than or equal to 0.5 milliseconds. For example, t_{O} may satisfy the foregoing formula (2-1). For a specific implementation of t_{O}, refer to the foregoing descriptions. Details are not described herein again. It may be understood that, because it takes time to transmit a ranging packet between the first communication apparatus and the second communication apparatus, the time is referred to as one-way flight time (a value of the one-way flight time is related to a distance between the first communication apparatus and the second communication apparatus). Therefore, for interlaced transmission, a start time interval between a first ranging packet sent by the first communication apparatus and a first ranging packet received by the first communication apparatus is less than or equal to (0.5 ms+one-way flight time). For serial transmission, a start time interval between a last ranging packet sent by the first communication apparatus and a first ranging packet received by the first communication apparatus is less than or equal to (0.5 ms+one-way flight time).

In this embodiment of this application, frequency stitching is used in a multi-millisecond ranging process, and one ranging packet is transmitted on one channel, so that ranging accuracy can be improved. In addition, when the in-sequence channel order is used, if a frequency overlap rate between channels is 25% or there is no overlap, the transmission start time interval between the two adjacent ranging packets is allowed to be less than 1 millisecond. In addition, when the out-of-sequence channel order is used, the transmission start time interval between the two adjacent ranging packets may also be less than 1 millisecond. In this way, an interval between ranging packets can be reduced, thereby reducing time required for ranging and improving ranging efficiency.

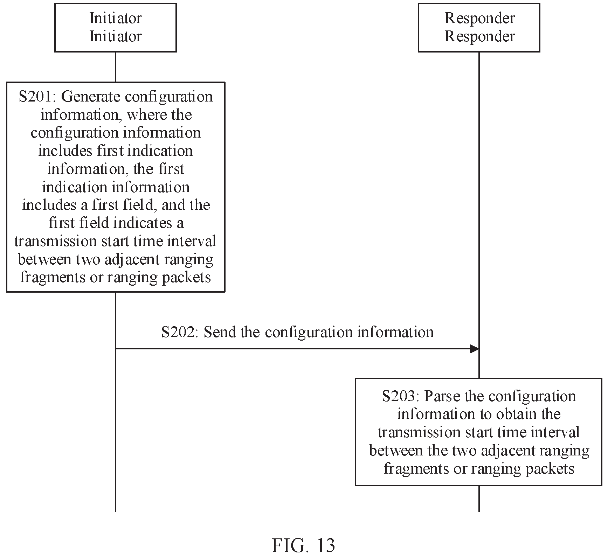

It may be understood that, before performing ranging, the initiator and the responder (for example, the first communication apparatus and the second communication apparatus) need to align some information related to ranging, for example, the transmission start time interval (t_{I}) between the two adjacent ranging fragments in this embodiment of this application. Therefore, an embodiment of this application further provides an information configuration method. FIG. 13 is a schematic flowchart of an information configuration method according to an embodiment of this application. The initiator (initiator) in the method may be the first communication apparatus or the second communication apparatus. This is not limited in embodiments of this application. Correspondingly, the responder (responder) may be the second communication apparatus or the first communication apparatus. In a possible implementation, the information configuration method shown in FIG. 13 may be implemented in combination with the ranging method shown in FIG. 9, or may be implemented independently. When the information configuration method shown in FIG. 13 is implemented in combination with the ranging method shown in FIG. 9, the information configuration method shown in FIG. 13 may be performed before step S102 in FIG. 9.

As shown in FIG. 13, the information configuration method includes but is not limited to the following steps:
S201: The initiator (initiator) generates configuration information, where the configuration information includes first indication information, the first indication information includes a first field, and the first field indicates a transmission start time interval between two adjacent ranging fragments or ranging packets. For example, the two adjacent ranging fragments are both RSFs or RIFs.
S202: The initiator (initiator) sends the configuration information. Correspondingly, the responder (responder) receives the configuration information.
S203: The responder (responder) parses the configuration information to obtain the transmission start time interval between the two adjacent ranging fragments or ranging packets.

In a possible implementation, the configuration information may include the first indication information, and the first indication information may indicate a parameter for frequency stitching. For example, the configuration information may further include one or more of the following: second indication information or third indication information. The second indication information may indicate whether the first indication information is present. When the second indication information indicates that the first indication information is not present, the third indication information may indicate a UWB channel used for multi-millisecond ranging. When the second indication information indicates that the first indication information is present, the third indication information may indicate a base channel (Base Channel) for multi-millisecond ranging using frequency stitching, or indicate a base channel for frequency stitching. In this embodiment of this application, the second indication information indicates that the first indication information is present. In other words, the second indication information in this embodiment of this application indicates that the first indication information is present in the configuration information.

In a possible implementation, the configuration information may be configured through an ultra-wideband (UWB). In other words, the initiator may send the configuration information through the UWB. For example, the configuration information may be a multi-millisecond (Multi-millisecond, MMS) ranging configuration (MMS Ranging Configuration) field in an application control information element (application control information element, AC IE). The first indication information and the second indication information may be newly added content in the MMS Ranging Configuration field, and the third indication information may be a UWB channel (UWB Channel) field in the MMS Ranging Configuration field.

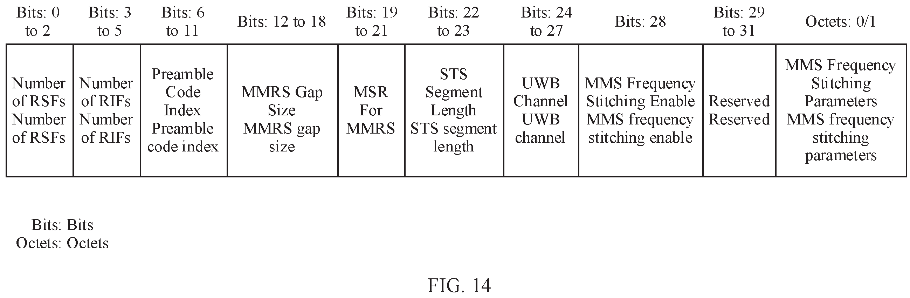

For example, FIG. 14 is a diagram of a frame format of a multi-millisecond ranging configuration field according to an embodiment of this application. As shown in FIG. 14, the MMS Ranging Configuration field includes but is not limited to: an MMS frequency stitching parameters (MMS Frequency Stitching Parameters) field (that is, the first indication information), an MMS frequency stitching enable (MMS Frequency Stitching Enable) field (that is, the second indication information), or a UWB Channel field (that is, the third indication information). The MMS Frequency Stitching Enable field (that is, the second indication information) may indicate whether the MMS Frequency Stitching Parameters field (that is, the first indication information) is present. For example, when a value of the MMS Frequency Stitching Enable field is a first value, it indicates that the MMS Frequency Stitching Parameters field is not present. When a value of the MMS Frequency Stitching Enable field is a second value, it indicates that the MMS Frequency Stitching Parameters field is present. The first value is 0, and the second value is 1; or the first value is 1, and the second value is 0. This is not limited in embodiments of this application. When the value of the MMS Frequency Stitching Enable field is the first value (for example, 0), the UWB Channel field (that is, the third indication information) indicates a UWB channel used for MMS ranging. When the value of the MMS Frequency Stitching Enable field is the second value (for example, 1), the UWB Channel field (that is, the third indication information) indicates a base channel used when frequency stitching is performed. The MMS Frequency Stitching Parameters field (that is, the first indication information) may indicate a parameter for frequency stitching. For details, refer to the following descriptions. Details are not described herein.

For example, as shown in FIG. 14, the MMS Ranging Configuration field may further include one or more of the following: a number of RSFs (Number of RSFs) field, a number of RIFs (Number of RIFs) field, a preamble code index (Preamble Code Index) field, a multi-millisecond ranging symbol gap size (MMRS Gap Size) field, a multi-millisecond ranging symbol repetitions (MSR For MMRS) field, or an STS segment length (STS Segment Length) field. The Number of RSFs field may indicate the number of RSFs. The Number of RIFs field may indicate the number of RIFs. The Preamble Code Index field may indicate a number of a preamble sequence used in an RSF. When a Preamble Code Index is 33 to 48, the MMRS Gap Size field indicates the number of "0s" added to an RSF or RIF. The MSR For MMRS field indicates the number of MMRSs in an RSF. The STS Segment Length field indicates the number of STS segments in an RIF.

It may be understood that names and lengths of the fields in FIG. 14 are merely examples. This is not limited in embodiments of this application.

In another possible implementation, the configuration information may alternatively be configured through a narrowband (NB). In other words, the initiator may send the configuration information through the NB. For example, the configuration information may be a UWB physical layer configuration (UWB PHY Configuration) field in the NB. The first indication information and the second indication information may be newly added content in the UWB PHY Configuration field, and the third indication information may be a UWB Channel field in the UWB PHY Configuration field.

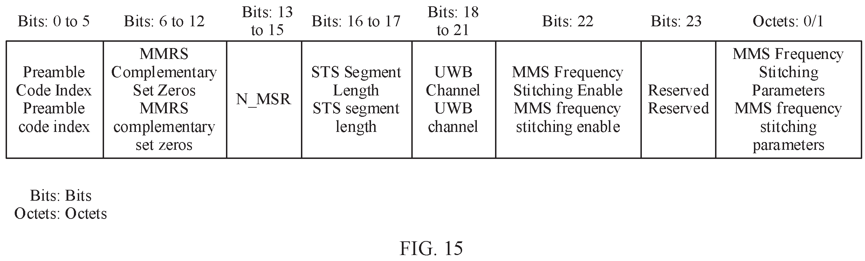

For example, FIG. 15 is a diagram of a frame format of a UWB physical layer configuration field according to an embodiment of this application. As shown in FIG. 15, the UWB PHY Configuration field includes but is not limited to: an MMS frequency stitching parameters (MMS Frequency Stitching Parameters) field (that is, the first indication information), an MMS frequency stitching enable (MMS Frequency Stitching Enable) field (that is, the second indication information), or the UWB Channel field (that is, the third indication information). For meanings of the MMS Frequency Stitching Parameters field, the MMS Frequency Stitching Enable field, and the UWB Channel field, refer to the foregoing descriptions (FIG. 14). Details are not described herein again.

For example, as shown in FIG. 15, the UWB PHY Configuration field may further include one or more of the following: a Preamble Code Index field, an MMRS Complementary Set Zeros (MMRS Complementary Set Zeros) field, N_MSR, or an STS Segment Length field. For meanings of the Preamble Code Index field and the STS Segment Length field, refer to the foregoing descriptions (FIG. 14). Details are not described herein again. When a Preamble Code Index is 33 to 48, the MMRS Complementary Set Zeros field indicates the number of "0s" added to an RSF or RIF. N_MSR indicates the number of MMRSs in an RSF.

It may be understood that names and lengths of the fields in FIG. 15 are merely examples. This is not limited in embodiments of this application.

In a possible implementation, the first indication information (for example, the MMS Frequency Stitching Parameters field) may include the first field. The first field may indicate the transmission start time interval (t_{I}) between the two adjacent ranging fragments (for example, two adjacent RSFs or two adjacent RIFs) or the two adjacent ranging packets. For example, the first indication information may further include a second field. The second field may indicate a transmission start time interval (t_{O}) between a first ranging fragment (or ranging packet) of the initiator and a first ranging fragment (or ranging packet) of the responder. Alternatively, the second field may indicate a transmission start time interval (t_{O}) between a last ranging fragment (or ranging packet) of the initiator and a first ranging fragment (or ranging packet) of the responder.

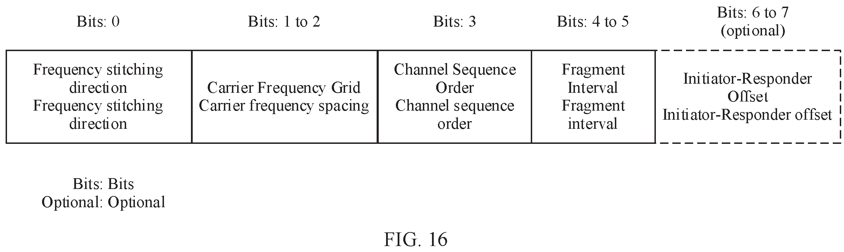

For example, the first indication information is the MMS Frequency Stitching Parameters field. FIG. 16 is a diagram of a frame format of an MMS Frequency Stitching Parameters field according to an embodiment of this application. As shown in FIG. 16, the MMS Frequency Stitching Parameters field includes but is not limited to a fragment interval (Fragment Interval) field (that is, the first field), and optionally further includes an initiator-responder offset (Initiator-Responder Offset) field (that is, the second field). The Fragment Interval field (that is, the first field) may indicate a transmission start time interval (t_{I}) between two adjacent RSFs, two adjacent RIFs, or two adjacent ranging packets. For example, when a value of the Fragment Interval field is a first value (for example, a binary value 00), t_{I} is 1200 RSTUs (that is, 1 ms); when a value of the Fragment Interval field is a second value (for example, a binary value 01), t_{I} is 900 RSTUs; when a value of the Fragment Interval field is a third value (for example, a binary value 10), t_{I} is 600 RSTUs; or when a value of the Fragment Interval field is a fourth value (for example, a binary value 11), t_{I} is 300 RSTUs. The Initiator-Responder Offset field (that is, the second field) may indicate a transmission start time interval (t_{O}) between a ranging fragment (or ranging packet) corresponding to the initiator and a ranging fragment (or ranging packet) corresponding to the responder. For interlaced transmission, the Initiator-Responder Offset field indicates a transmission start time interval t_{O} between a first ranging fragment/ranging packet sent by the initiator and a first ranging fragment/ranging packet sent by the responder. For serial transmission, the Initiator-Responder Offset field indicates a transmission start time interval t_{O} between a last ranging fragment/ranging packet sent by the initiator and a first ranging fragment/ranging packet sent by the responder. For example, when a value of the Initiator-Responder Offset field is a first value (for example, a binary value 00), t_{O} is 600 RSTUs (that is, 0.5 ms); when a value of the Initiator-Responder Offset field is a second value (for example, a binary value 01), t_{O} is 450 RSTUs; when a value of the Initiator-Responder Offset field is a third value (for example, a binary value 10), t_{O} is 300 RSTUs; or when a value of the Initiator-Responder Offset field is a fourth value (for example, a binary value 11), t_{O} is 150 RSTUs. It may be understood that when the Initiator-Responder Offset field (that is, the second field) is not present, t_{O} may be a fixed proportion of t_{I}. For example, t_{O} satisfies the foregoing formula (2-1).

For example, as shown in FIG. 16, the MMS Frequency Stitching Parameters field (that is, the first indication information) may further include one or more of the following: a frequency stitching direction (Frequency Stitching Direction) field, a carrier frequency spacing (Carrier Frequency Grid) field, or a channel sequence order (Channel Sequence Order) field. The frequency stitching direction field may indicate whether center frequencies of channels for frequency stitching are in ascending or descending order relative to a center frequency of a base channel, or indicate whether a center frequency of a channel subsequently used for frequency stitching is greater than or less than a center frequency of a first channel for frequency stitching. For example, when a value of the frequency stitching direction field is 1, it indicates that the center frequencies of the channels for frequency stitching are in the ascending order on the basis of the center frequency of the base channel; or when a value is 0, it indicates that the center frequencies of the channels for frequency stitching are in the descending order on the basis of the center frequency of the base channel. The carrier frequency spacing field may indicate a spacing between channels for frequency stitching. A correspondence between a value and a meaning of the carrier frequency spacing field is shown in the following Table 1.

**Table 1: Value and meaning of a carrier frequency grid field**

| Carrier Frequency Grid field value | meaning |
|---|---|
| | Meaning |
| Value of a carrier frequency spacing field | |
| 0 | 499.2 MHz carrier frequency grid. No overlap of consecutive frequency stitching channels. 499.2 MHz carrier frequency spacing. |
| | No overlap of consecutive frequency stitching channels. |
| 1 | 374.4 MHz carrier frequency grid. 25% overlap of consecutive frequency stitching channels. 374.4 MHz carrier frequency spacing. |
| | 25% overlap of consecutive frequency stitching channels. |
| 2 | 249.6 MHz carrier frequency grid. 50% overlap of consecutive frequency stitching channels. 249.6 MHz carrier frequency spacing. |
| | 50% overlap of consecutive frequency stitching channels. |
| 3 | 124.8 MHz carrier frequency grid. 75% overlap of consecutive frequency stitching channels. 124.8 MHz carrier frequency spacing. |
| | 75% overlap of consecutive frequency stitching channels. |

The channel sequence order field may indicate whether channel transmission order of channels for frequency stitching is: sequentially using the channels in ascending or descending order of center frequencies, or skipping sequentially using the channels in ascending or descending order of center frequencies.

In a possible implementation, the first indication information (for example, the MMS Frequency Stitching Parameters field) may further include one or more of the following: a base channel (Base Channel) field, a number of transmissions (Number of Transmissions) field, a frequency stitching type (Frequency Stitching Type) field, or a feedback control (Feedback Control) field.

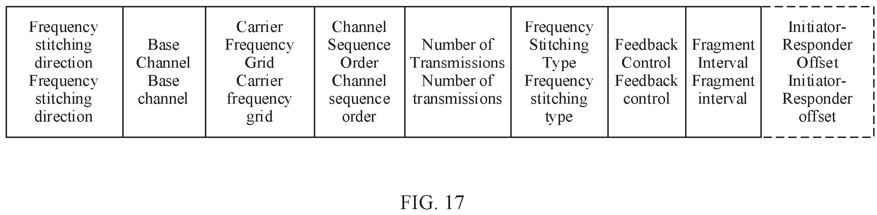

For example, the first indication information is the MMS Frequency Stitching Parameters field. FIG. 17 is a diagram of another frame format of an MMS Frequency Stitching Parameters field according to an embodiment of this application. As shown in FIG. 17, the MMS Frequency Stitching Parameters field includes but is not limited to a fragment interval (Fragment Interval) field (that is, the first field), and optionally further includes an initiator-responder offset (Initiator-Responder Offset) field (that is, the second field). For meanings of the Fragment Interval field and the Initiator-Responder Offset field and related descriptions thereof, refer to the foregoing descriptions (FIG. 16). Details are not described herein again. For example, as shown in FIG. 17, the MMS Frequency Stitching Parameters field (that is, the first indication information) may further include one or more of the following: a frequency stitching direction field, a base channel field, a carrier frequency spacing field, a channel sequence order field, a number of transmissions field, a frequency stitching type field, or a feedback control field. For related descriptions of the frequency stitching direction field, the carrier frequency spacing field, and the channel sequence order field, refer to the foregoing descriptions (FIG. 16). Details are not described herein again.

The base channel field may indicate a channel number (channel number) of a base channel. The base channel in this application may be a first channel for frequency stitching. It may be understood that, if the base channel field is present in the MMS Frequency Stitching Parameters field, the MMS Ranging Configuration field (as shown in FIG. 14) and the UWB Channel field in the UWB PHY Configuration field (as shown in FIG. 15) are reserved or not used when the MMS Frequency Stitching Enable field indicates that the MMS Frequency Stitching Parameters field is present. When the MMS Frequency Stitching Enable field indicates that the MMS Frequency Stitching Parameters field is not present, the UWB Channel field retains an existing meaning, for example, indicating a UWB channel for MMS ranging. A value of the number of transmissions field is 1, indicating a total number of frequency bands (or channels) for frequency stitching. When a value of the frequency stitching type field is 0, it indicates intra-packet frequency stitching. When a value of the frequency stitching type field is 1, it indicates inter-packet frequency stitching. When a value of the frequency stitching type field is 2, it indicates intra-packet and inter-packet frequency stitching. When a value of the frequency stitching type field is 3, it indicates reserved. The feedback control field may indicate CIR feedback control of frequency stitching. A correspondence between a value and a meaning of the feedback control field is shown in the following Table 2.

**Table 2: Value and meaning of a feedback control field**

| Feedback Control field value | meaning |
|---|---|
| Value of a feedback control field | Meaning |
| 0 | Report after each transmission Report after each transmission |
| 1 | Report for all transmission after the last transmission |
| | Report for all transmissions after a last transmission |
| 2 | Report for the aggregated channel after the last transmission |
| | Report for an aggregated channel after a last transmission |

It may be understood that names and lengths of the fields in FIG. 16 and FIG. 17 are merely examples. This is not limited in embodiments of this application.

In a possible implementation, when this embodiment of this application is implemented in combination with the ranging method shown in FIG. 9, the first communication apparatus and the second communication apparatus in FIG. 9 perform ranging based on content of the configuration information. For example, the first communication apparatus transmits ranging fragments based on t_{I} indicated by the first field (for example, the Fragment Interval field).

An embodiment of this application provides a method for configuring frequency stitching parameters (Frequency Stitching Parameters) in MMS ranging, to lay a foundation for using frequency stitching in a subsequent multi-millisecond ranging process, thereby obtaining higher ranging accuracy and ranging efficiency.

In an optional embodiment, the ranging method provided in this embodiment of this application may alternatively be implemented by using sensing packets (sensing packet) or data packets (data packet). For the sensing packets or data packets, P is equal to K. The ranging method in this embodiment of this application may be described as follows: The first communication apparatus generates K sensing packets or K data packets, and sends the K sensing packets or the K data packets to the second communication apparatus through K channels, where one sensing packet or data packet is transmitted on each of the K channels, and a transmission start time interval between two adjacent sensing packets or two adjacent data packets is less than or equal to T milliseconds. For example, T is equal to 1. For another example, if an average value of maximum power spectral density (PSD) of a UWB signal within a milliseconds does not exceed a threshold, T is equal to a. For ease of understanding, the following uses an example in which T is equal to 1 for description. Correspondingly, the second communication apparatus determines a channel impulse response based on the received K sensing packets or the received K data packets.

The K channels may be used for frequency stitching, and K is an integer greater than 1.

For example, a channel transmission order of the K channels is: sequentially using the K channels in ascending or descending order of center frequencies. When there is no (frequency) overlap between the K channels, or an overlap rate between two adjacent channels in the K channels is 25%, the transmission start time interval (t_{I}) between the two adjacently transmitted sensing packets (or the two adjacently transmitted data packets) may be less than 1 millisecond. When an overlap rate between two adjacent channels in the K channels is 50% or 75%, the transmission start time interval (t_{I}) between the two adjacently transmitted sensing packets (or the two adjacently transmitted data packets) may be equal to 1 millisecond. For another example, the channel transmission order of the K channels is: skipping sequentially using the K channels in ascending or descending order of center frequencies, or using the K channels in ascending or descending order of center frequencies in a non-sequential manner. In this case, the transmission start time interval (t_{I}) between the two adjacently transmitted sensing packets (or the two adjacently transmitted data packets) may be less than 1 millisecond. For a specific implementation of t_{I}, refer to the descriptions in the embodiment shown in FIG. 9. Details are not described herein again.

In a possible implementation, a value of t_{I} may be determined through signaling interaction between a receiver and a transmitter. For details, refer to the following descriptions. Details are not described herein. Alternatively, the value of t_{I} may be agreed in a standard protocol.

It may be understood that, in a ranging process (or a ranging period or a ranging session), the initiator (initiator) and the responder (responder) may follow same channel transmission order. For example, at the initiator, a channel transmission order of the K channels is: sequentially using the K channels in ascending or descending order of center frequencies. In this case, at the responder, a channel transmission order of the K channels also is: sequentially using the K channels in ascending or descending order of center frequencies. Alternatively, at the responder, the channel transmission order of the K channels is: using the K channels in ascending or descending order of center frequencies in a non-sequential manner. In this case, at the initiator, the channel transmission order of the K channels also is: using the K channels in ascending or descending order of center frequencies in a non-sequential manner. It may be further understood that, when the channel transmission order of the K channels is: sequentially using the K channels in the ascending or descending order of the center frequencies, an overlap rate between two adjacent channels in the K channels of the initiator may be the same as an overlap rate between two adjacent channels in the K channels of the responder. It may be further understood that, in the K channels, a base channel of the initiator is the same as a base channel of the responder.

For example, for interlaced transmission, a transmission start time interval t_{O} between a first sensing packet sent by the first communication apparatus and a first sensing packet sent by the second communication apparatus is less than or equal to 0.5 milliseconds, or a transmission start time interval t_{O} between a first data packet sent by the first communication apparatus and a first data packet sent by the second communication apparatus is less than or equal to 0.5 milliseconds. For example, t_{O} may satisfy the foregoing formula (2-1). For a specific implementation of t_{O}, refer to the foregoing descriptions. Details are not described herein again. It may be understood that, because it takes time to transmit a sensing packet or data packet between the first communication apparatus and the second communication apparatus, the time is referred to as one-way flight time (a value of the one-way flight time is related to a distance between the first communication apparatus and the second communication apparatus). Therefore, for interlaced transmission, a start time interval between a first sensing packet sent by the first communication apparatus and a first sensing packet received by the first communication apparatus is less than or equal to (0.5 ms+one-way flight time), or a start time interval between a first data packet sent by the first communication apparatus and a first data packet received by the first communication apparatus is less than or equal to (0.5 ms+one-way flight time).

It may be understood that the method for performing ranging by using sensing packets or data packets in this embodiment of this application is similar to the foregoing method for performing ranging by using ranging packets. When there is no logical conflict, the two methods may be mutually referenced.

In this embodiment of this application, frequency stitching is used in a sensing or data transmission process to complete ranging. To be specific, in this embodiment of this application, sensing packets or data packets are used to perform ranging, and one sensing packet or data packet is transmitted on one channel, so that ranging accuracy can be improved. In addition, when the in-sequence channel order is used, if a frequency overlap rate between channels is 25% or there is no overlap, the transmission start time interval between the two adjacent sensing packets or data packets is allowed to be less than 1 millisecond. In addition, when the out-of-sequence channel order is used, the transmission start time interval between the two adjacent sensing packets or data packets may also be less than 1 millisecond. In this way, an interval between the sensing packets or data packets can be reduced, thereby reducing time required for ranging and improving ranging efficiency.

It may be understood that, before the sensing packets or data packets are used to perform ranging, the first communication apparatus and the second communication apparatus may align some information related to ranging, for example, the transmission start time interval (t_{I}) between the two adjacent sensing packets or data packets in this embodiment of this application.

In a possible implementation, the initiator (initiator) generates and sends configuration information, where the configuration information includes indication information A and indication information B, the indication information A indicates whether to use a sensing packet for ranging, or the indication information A indicates whether to use a data packet for ranging, and the indication information B indicates the transmission start time interval (t_{I}) between the two adjacent sensing packets or the two adjacent data packets. Correspondingly, the responder (responder) receives and parses the configuration information.

The initiator (initiator) herein may be the first communication apparatus or the second communication apparatus. This is not limited in embodiments of this application. Correspondingly, the responder (responder) herein may be the second communication apparatus or the first communication apparatus.

For example, the configuration information may be a sensing control field (Sensing Control field) or a data communication control field (Data Comm Control field) in an application control information element (application control information element, AC IE). It may be understood that, when the configuration information is the sensing control field in the AC IE, the indication information A may indicate whether to use a sensing packet for ranging, and the indication information B may indicate the transmission start time interval (t_{I}) between the two adjacent sensing packets. When the configuration information is the data communication control field in the AC IE, the indication information A may indicate whether to use a data packet for ranging, and the indication information B may indicate the transmission start time interval (t_{I}) between the two adjacent data packets.

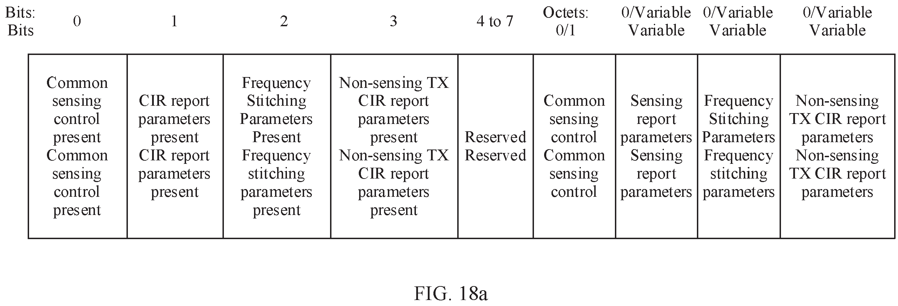

For example, the foregoing configuration information is the sensing control field in the AC IE. FIG. 18a is a diagram of a frame format of a sensing control field according to an embodiment of this application. As shown in FIG. 18a, the sensing control field (Sensing Control field) may include but is not limited to a frequency stitching parameters present (Frequency Stitching Parameters Present) field, and optionally further includes a frequency stitching parameters (Frequency Stitching Parameters) field. The frequency stitching parameters present field may indicate whether the frequency stitching parameters field is present. For example, if a value of the frequency stitching parameters present field is 1, it indicates that the frequency stitching parameters field is present; or if a value of the frequency stitching parameters present field is 0, it indicates that the frequency stitching parameters field is not present. In this embodiment of this application, the value of the frequency stitching parameters present field is a first value (for example, 1), indicating that the frequency stitching parameters field is present.

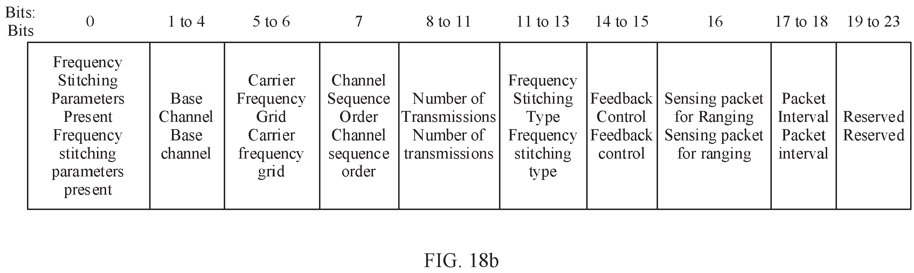

A frame format of the frequency stitching parameters field may be shown in FIG. 18b. FIG. 18b is a diagram of a frame format of a frequency stitching parameters field in a sensing control field according to an embodiment of this application. As shown in FIG. 18b, the frequency stitching parameters field includes but is not limited to: a sensing packet for ranging (Sensing packet for Ranging) field (that is, the indication information A) and a packet interval (Packet Interval) field (that is, the indication information B). The Sensing packet for Ranging field (that is, the indication information A) may indicate whether to use a sensing packet for ranging. For example, when a value of the Sensing packet for Ranging field is a first value (for example, 1), it indicates to use a sensing packet for ranging; or when a value of the Sensing packet for Ranging field is a second value (for example, 0), it indicates not to use a sensing packet for ranging. The Packet Interval field (that is, the indication information B) may indicate the transmission start time interval (t_{I}) between the two adjacent sensing packets. For example, when a value of the Packet Interval field is a first value (for example, 0), t_{I} is 1200 RSTUs (that is, 1 ms); when a value of the Packet Interval field is a second value (for example, 1), t_{I} is 900 RSTUs; when a value of the Packet Interval field is a third value (for example, 2), t_{I} is 600 RSTUs; or when a value of the Packet Interval field is a fourth value (for example, 3), t_{I} is 300 RSTUs.

For example, as shown in FIG. 18b, the frequency stitching parameters field further includes one or more of the following: a frequency stitching direction (Frequency Stitching Direction) field, a base channel (Base Channel) field, a carrier frequency spacing (Carrier Frequency Grid) field, a channel sequence order (Channel Sequence Order) field, a number of transmissions (Number of Transmissions) field, a frequency stitching type (Frequency Stitching Type) field, or a feedback control (Feedback Control) field. When the Sensing packet for Ranging field (that is, the indication information A) indicates to use a sensing packet for ranging, the responder (responder) ignores the feedback control field when interpreting the frequency stitching parameters field. A value and a meaning of the Frequency Stitching Type field are shown in the following Table 3.

**Table 3**

| Frequency Stitching Type field value | Meaning (Meaning) |
|---|---|
| Value of a frequency stitching type field | |
| 0 | Intra-packet frequency stitching |
| | Intra-packet frequency stitching |
| 1 | Inter-packet frequency stitching |
| | Inter-packet frequency stitching |
| 2 | Combination intra-packet frequency stitching and inter-packet frequency stitching |
| | Combination of intra-packet frequency stitching and inter-packet frequency stitching |
| 3 | Reserved Reserved |

It may be understood that, when the Sensing packet for Ranging field (that is, the indication information A) indicates to use a sensing packet for ranging, a value of the Frequency Stitching Type field is 1, indicating inter-packet frequency stitching (Inter-packet frequency stitching).

It may be further understood that, for descriptions of other fields in the frequency stitching parameters field shown in FIG. 18b, refer to descriptions in other parts of this application. Details are not described herein.

An embodiment of this application provides an information configuration method, to lay a foundation for subsequently performing ranging by using sensing packets or data packets, thereby obtaining higher ranging accuracy and ranging efficiency.

In another possible implementation, the initiator (initiator) generates and sends an application control information element (AC IE), where a content control field (content control field) in the AC IE includes indication information C, and the indication information C indicates whether one or more of a ranging control field (Ranging Control field), a sensing control field (Sensing Control field), and a data communication control field (Data Comm Control field) are present. The indication information C is 3 bits, which are respectively 3 bits of the content control field: B7, B8, and B9. Correspondingly, the responder (responder) receives and parses the AC IE.

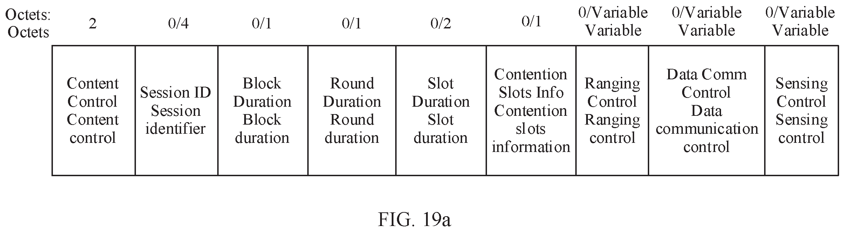

FIG. 19a is a diagram of a frame format of an AC IE according to an embodiment of this application. As shown in FIG. 19a, the AC IE includes but is not limited to a content control (Content Control) field. For example, the AC IE may further include one or more of the following fields: session identifier (Session ID), block duration (Block Duration), slot duration (Slot Duration), round duration (Round Duration), contention slots information (Contention Slots Info), ranging control (Ranging Control), data communication control (Data Comm Control), or sensing control (Sensing Control). The content control (Content Control) field indicates whether other fields in the AC IE are present For descriptions of the Session ID field, the Block Duration field, the Slot Duration field, the Round Duration field, the Contention Slots Info field, the Ranging Control field, the Data Comm Control field, and the Sensing Control field in the AC IE, refer to the conventional technology. Details are not described herein.

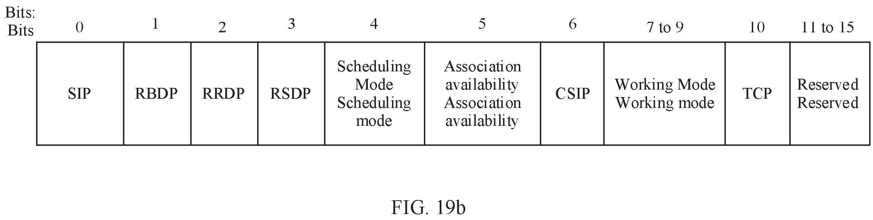

FIG. 19b is a diagram of a frame format of a content control field in an AC IE according to an embodiment of this application. As shown in FIG. 19b, the content control field includes but is not limited to a working mode (Working Mode) field (that is, the indication information C). It may be understood that, in the conventional technology, B7 of the content control field is a ranging control present (Ranging Control Present, RCP) field, B8 is a data communication control present (Data Comm Control Present, DCP) field, and B9 is a sensing control present (Sensing Control Present, SCP) field. In this embodiment of this application, B7, B8, and B9 of the content control field are defined as the working mode (Working Mode) field (that is, the indication information C). A value and a meaning of the Working Mode field are shown in Table 4 below.

**Table 4**

| Working Mode field value | Meaning | Present |
|---|---|---|
| Value of a Working mode field | Meaning | Present |
| 0 | Ranging packet for ranging | Ranging Control field |
| | Ranging packet for ranging | |
| 1 | Sensing packet for sensing | Sensing Control field |
| | Sensing packet for sensing | |
| 2 | Data packet for data comm. | Data Comm Control field |
| | Data packet for data communication | |
| 3 | Ranging packet for sensing | Ranging Control field & Sensing Control field |
| | Ranging packet for sensing | |
| 4 | Sensing packet for ranging | Ranging Control field & Sensing Control field |
| | Sensing packet for ranging | |
| 5 | Data packet for sensing | Data Comm Control field & Sensing Control field |
| | Data packet for sensing | |
| 6 | Data packet for ranging | Data Comm Control field & Ranging Control field |
| | Data packet for ranging | |
| 7 | Reserved Reserved | Reserved |

It may be understood that, as shown in Table 4, when the Working Mode field indicates to use a ranging packet for ranging, it indicates that the Ranging Control field is present in the AC IE. When the Working Mode field indicates to use a sensing packet for sensing, it indicates that the Sensing Control field is present in the AC IE. When the Working Mode field indicates to use a data packet for data communication, it indicates that the Data Comm Control field is present in the AC IE. When the Working Mode field indicates to use a ranging packet for sensing, it indicates that the Ranging Control field and the Sensing Control field are present in the AC IE. When the Working Mode field indicates to use a data packet for sensing, it indicates that the Data Comm Control field and the Sensing Control field are present in the AC IE. When the Working Mode field indicates to use a data packet for ranging, it indicates that the Data Comm Control field and the Ranging Control field are present in the AC IE.

In another optional embodiment, the ranging method provided in this embodiment of this application may be further implemented by using sensing segments (sensing segment). The ranging method in this embodiment of this application may be described as follows: The first communication apparatus generates P sensing segments, and sends the P sensing segments to the second communication apparatus through K channels, where at least one sensing segment is transmitted on each of the K channels. Correspondingly, the second communication apparatus determines a channel impulse response based on the received P sensing segments.

The K channels may be used for frequency stitching, and K is an integer greater than 1. P is an integer greater than 1. P may be greater than or equal to K.

For example, a channel transmission order of the K channels is: sequentially using the K channels in ascending or descending order of center frequencies. For another example, the channel transmission order of the K channels is: skipping sequentially using the K channels in ascending or descending order of center frequencies, or using the K channels in ascending or descending order of center frequencies in a non-sequential manner.

It may be understood that one sensing packet (sensing packet) may include one or more sensing segments. There is a time gap (gap) between two adjacent sensing segments in one sensing packet. For the time interval, refer to the conventional technology. For example, the time interval is equal to duration of 40 sensing symbols (sensing symbol). The P sensing segments may belong to a sensing packet, or may belong to a plurality of sensing packets.

In a possible implementation, all the P sensing segments belong to the same sensing packet. In this case, P is equal to K, and one sensing segment is transmitted on each of the K channels, that is, K (equal to P) sensing segments are sequentially transmitted on the K channels.

In another possible implementation, the P sensing segments belong to the plurality of sensing packets. In this case, P may be equal to K, or P may be greater than K. When P is equal to K, one sensing segment is transmitted on each of the K channels. When P is greater than K, K may be equal to the number of sensing segments in a sensing packet (the sensing packet may be a sensing packet with the largest number of sensing segments), one sensing segment in one sensing packet is transmitted on one channel, and sensing segments in different sensing packets are repeatedly transmitted on the K channels. For example, P is equal to 8, where four sensing segments belong to a sensing packet 1, and the other four sensing segments belong to a sensing packet 2. In this case, K may be equal to 4. For the four sensing segments in the sensing packet 1, one sensing segment is transmitted on each of the four channels. For the four sensing segments in the sensing packet 2, one sensing segment is still transmitted on each of the four channels. This case may also be understood as that different sensing packets are periodically and repeatedly sent on the K channels. For another example, P is equal to 8, where five sensing segments belong to a sensing packet 1, and the other three sensing segments belong to a sensing packet 2. In this case, K may be equal to 5. For the five sensing segments in the sensing packet 1, one sensing segment is transmitted on each of the five channels. For the three sensing segments in the sensing packet 2, the first three sensing segments are sequentially transmitted on the first three channels in the four channels.

For example, when the P sensing segments belong to the plurality of sensing packets, the transmission start time interval (t_{I}) between the two adjacently transmitted sensing packets in the plurality of sensing packets is less than or equal to T ms. For example, T is equal to 1. For another example, if an average value of maximum power spectral density (PSD) of a UWB signal within a milliseconds does not exceed a threshold, T is equal to a. For ease of understanding, the following uses an example in which T is equal to 1 for description.

In a possible implementation, a value of t_{I} may be determined through signaling interaction between a transmitter and a receiver, or a value of t_{I} may be agreed on in a standard protocol.

It may be understood that the method for performing ranging by using sensing segments in this embodiment of this application is similar to the foregoing method for performing ranging by using ranging fragments. When there is no logical conflict, the two methods may be mutually referenced.

In this embodiment of this application, the sensing segments are used to perform ranging, and at least one sensing segment is transmitted on one channel, so that ranging accuracy can be improved.

It may be understood that, before the sensing segments are used to perform ranging, the first communication apparatus and the second communication apparatus may align some information related to ranging.

In a possible implementation, the initiator (initiator) generates and sends configuration information, where the configuration information includes indication information A, and the indication information A indicates whether to use a sensing packet to perform ranging. Correspondingly, the responder (responder) receives and parses the configuration information. For example, the configuration information may further include indication information B, and the indication information B indicates the transmission start time interval (t_{I}) between the two adjacent sensing packets. The initiator (initiator) herein may be the first communication apparatus or the second communication apparatus. This is not limited in embodiments of this application. Correspondingly, the responder (responder) herein may be the second communication apparatus or the first communication apparatus.

It may be understood that when the P sensing segments belong to a same sensing packet, the configuration information may include the indication information A. When the P sensing segments belong to a plurality of sensing packets, the configuration information may include the indication information A and the indication information B. For example, for descriptions of the configuration information, the indication information A, or the indication information B, refer to the descriptions in FIG. 18a and FIG. 18b. Details are not described herein again.

In other words, when the P sensing segments belong to the same sensing packet, the configuration information may not include a Packet Interval field; or the configuration information includes a Packet Interval field, but the Packet Interval field indicates reserved.

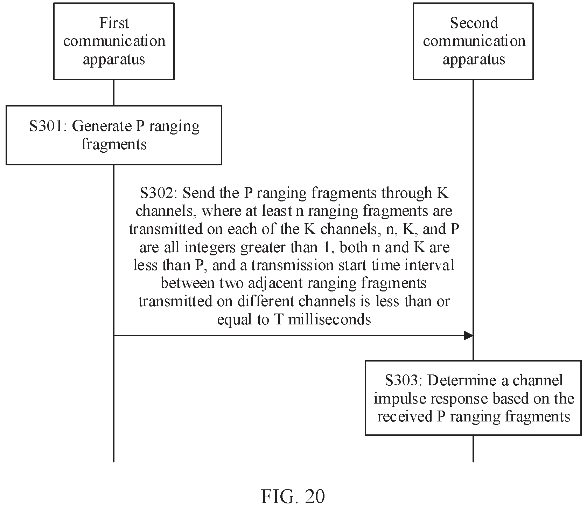

FIG. 20 is another schematic flowchart of a ranging method according to an embodiment of this application. A first communication apparatus and a second communication apparatus in the method may be any two devices that can perform data communication in FIG. 1 or FIG. 2. In a possible implementation, the first communication apparatus in the method may be used as an initiator (initiator), and the second communication apparatus may be used as a responder (responder). Certainly, the first communication apparatus may alternatively be used as a responder (responder), and the second communication apparatus may be used as an initiator (initiator). This is not limited in embodiments of this application.

As shown in FIG. 20, the ranging method includes but is not limited to the following steps:
S301: The first communication apparatus generates P ranging fragments.
S302: The first communication apparatus sends the P ranging fragments to the second communication apparatus through K channels, where at least n ranging fragments are transmitted on each of the K channels, n, K, and P are all integers greater than 1, both n and K are less than P, and a transmission start time interval between two adjacent ranging fragments transmitted on different channels is less than or equal to T milliseconds. For example, T may be equal to 1. For another example, if an average value of maximum power spectral density (PSD) of a UWB signal within a milliseconds does not exceed a threshold, T is equal to a.

In a possible implementation, the K channels may be used for frequency stitching (Frequency Stitching), and K may be an integer greater than 1. A channel transmission order of the K channels may be: sequentially using the K channels in ascending or descending order of center frequencies, that is, in-sequence channel order (in-sequence channel order). Alternatively, the channel transmission order of the K channels may be: skipping sequentially using the K channels in ascending or descending order of center frequencies. In other words, the channel transmission order of the K channels may be: using the K channels in the ascending or descending order of the center frequencies in a non-sequential manner, that is, out-of-sequence channel order (out-of-sequence channel order). The channel transmission order of the out-of-sequence channel order may be specifically obtained according to the foregoing formula (1-4).

In a possible implementation, the at least n ranging fragments are transmitted on each of the K channels, where n is an integer greater than 1. In this case, P may be greater than or equal to a product of n and K.

In a possible implementation, if the P ranging fragments are all RSFs or RIFs, P may be equal to a product of n and K. In this case, n ranging fragments are transmitted on each of the K channels.

In another possible implementation, if the P ranging fragments include R RSFs and M RIFs, P may be greater than a product of n and K. Both R and M are positive integers less than or equal to a product of n and K, R or M is an integer multiple of n, and R is equal to a product of n and K, or M is equal to a product of n and K. For example, if R is equal to a product of n and K, for the R RSFs, n RSFs are transmitted on each of the K channels, and the K channels are used in the channel transmission order of the in-sequence channel order or the out-of-sequence channel order. In this case, a channel for transmitting the first n RSFs (certainly including a first RSF) is a base channel of the K channels. For the M RIFs, if M is greater than n, the M RIFs are transmitted on $\left⌈M/n\right⌉$ channels (for example, the first $\left⌈M/n\right⌉$ channel in the channel transmission order) in the K channels, at least one RIF is transmitted on each of the $\left⌈M/n\right⌉$ channels, and a channel for transmitting a first RIF is a base channel of the K channels. In this application, the symbol " ┌ ┐" represents rounding up. Details are not described below again. If M is less than n, the M RIFs are transmitted on a base channel of the K channels. For example, n is equal to 2, K is equal to 6, R is equal to 12, and M is equal to 4. For the 12 RSFs, two RSFs are transmitted on each of the six channels. For the four RIFs, the four RIFs are transmitted on two of the six channels, for example, transmitted on the first two channels in the channel transmission order, and two RIFs are transmitted on each channel. Certainly, four of the six channels may be used for transmission, and one RIF is transmitted on each channel. For another example, n is equal to 2, K is equal to 6, R is equal to 12, and M is equal to 5. For the 12 RSFs, two RSFs are transmitted on each of the six channels. For the five RIFs, the five RIFs are transmitted on three of the six channels, for example, transmitted on the first three channels in the channel transmission order, where two RIFs are transmitted on each of the first two channels, and one RIF is transmitted on a last channel. Certainly, five of the six channels may be used for transmission, and five RIFs are transmitted on each channel. For another example, n is equal to 2, K is equal to 6, R is equal to 12, and M is equal to 1. For the 12 RSFs, two RSFs are transmitted on each of the six channels. For the one RIF, the RIF may be transmitted on a base channel of the six channels.

For example, if M is equal to a product of n and K, for the M RIFs, n RIFs are transmitted on each of the K channels, and the K channels are used in the channel transmission order of the in-sequence channel order or the out-of-sequence channel order. In this case, a channel for transmitting the first n RIFs (certainly including a first RIF) is a base channel of the K channels. For the R RSFs, if R is greater than n, the R RSFs are transmitted on $\left⌈R/n\right⌉$ channels (for example, the first $\left⌈R/n\right⌉$ channels in the channel transmission order) in the K channels, at least n RSFs are transmitted on each of the $\left⌈R/n\right⌉$ channels, and a channel for transmitting a first RSF is a base channel of the K channels. If R is less than n, the R RIFs are transmitted on a base channel of the K channels.

In a possible implementation, a value of n may be determined through signaling interaction between a receiver and a transmitter. For details, refer to the following descriptions in the embodiments. Details are not described herein. Alternatively, a value of n may be agreed in a standard protocol.

In a possible implementation, the transmission start time interval between the two adjacent ranging fragments transmitted on different channels is less than or equal to T milliseconds. However, a transmission start time interval between two adjacent ranging fragments transmitted on a same channel is equal to T milliseconds. The "two adjacent ranging fragments" may be ranging fragments of a same type, for example, both are RSFs or RIFs. For example, T is equal to 1. It may be understood that if there is another limitation on PSD of a UWB signal, T may alternatively have another value. This is not limited in embodiments of this application. For example, if an average value of maximum power spectral density (PSD) of the UWB signal within a milliseconds does not exceed a threshold, T is equal to a. For ease of understanding, the following uses an example in which T is equal to 1 for description.

In a possible implementation, the channel transmission order of the K channels is: sequentially using the K channels in ascending or descending order of center frequencies. When there is no (frequency) overlap between the K channels, or an overlap rate between two adjacent channels in the K channels is 25%, the transmission start time interval between the two adjacent ranging fragments transmitted on different channels may be less than 1 millisecond. When an overlap rate between two adjacent channels in the K channels is 50% or 75%, the transmission start time interval between the two adjacent ranging fragments transmitted on different channels may be equal to 1 millisecond. In another possible implementation, the channel transmission order of the K channels is: skipping sequentially using the K channels in ascending or descending order of center frequencies, or using the K channels in ascending or descending order of center frequencies in a non-sequential manner. Regardless of whether there is an overlap between the K channels or what an overlap rate is, the transmission start time interval between the two adjacent ranging fragments transmitted on different channels may be less than 1 millisecond.

It may be understood that the "transmission start time interval" in this embodiment of this application is in a unit of millisecond (ms). In actual application, the transmission start time interval may alternatively be in a unit of a ranging schedule time unit (ranging schedule time unit, RSTU). For example, a conversion relationship between a millisecond (ms) and an RSTU may be as follows: 1200 RSTUs are equal to 1 ms, and 600 RSTUs are equal to 0.5 ms.

In a possible implementation, when the P ranging fragments include both RSFs and RIFs, a transmission start time interval between a last RSF and a first RIF is a preset value, for example, 2 milliseconds or 2400 RSTUs.

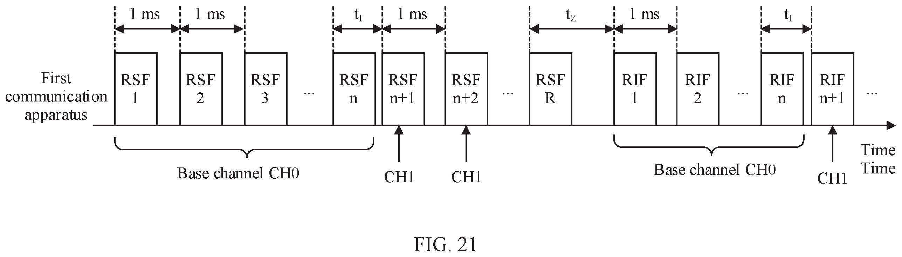

For example, FIG. 21 is another diagram of a transmission start time interval between ranging fragments according to an embodiment of this application. The first communication apparatus may be an initiator (initiator), or may be a responder (responder). The first communication apparatus sends R RSFs and M RIFs in total through the K channels. It is assumed that a base channel of the K channels is CH0, and the channel transmission order of the K channels is CH0, CH1, CH2, ..., and CH(K-1). R is equal to a product of n and K, or M is equal to a product of n and K. As shown in FIG. 21, RSFs 1 to n are transmitted on the base channel (CH0), RSFs (n+1) to (2n) are transmitted on the channel CH1, RSFs (2n+1) to (3n) are transmitted on the channel CH2, and the rest may be deduced by analogy. RIFs 1 to n are transmitted on the base channel (CH0), RIFs (n+1) to (2n) are transmitted on the channel CH1, RIFs (2n+1) to (3n) are transmitted on the channel CH2, and the rest may be deduced by analogy.

As shown in FIG. 21, a transmission start time interval between two adjacent RSFs transmitted on different channels is t_{I}, a transmission start time interval between two adjacent RIFs transmitted on different channels is also t_{I}, and a transmission start time interval between a last RSF (for example, an RSF R in FIG. 21) and a first RIF (for example, an RIF 1 in FIG. 21) is t_{Z}. A transmission start time interval between two adjacent RSFs or RIFs transmitted on a same channel is equal to 1 millisecond. t_{I} may be less than or equal to 1 millisecond, and t_{Z} may be less than or equal to 2 milliseconds. For descriptions of t_{I} and t_{Z}, refer to the related descriptions in the embodiment shown in FIG. 9. Details are not described herein again.

It may be understood that FIG. 21 is merely an example. In actual application, the first communication apparatus may send only RSFs or send only RIFs. This is not limited in embodiments of this application.

It may be understood that the ranging method in this embodiment of this application may be applied to a unidirectional ranging scenario or a bidirectional ranging scenario. When the ranging method in this embodiment of this application is applied to the bidirectional ranging scenario, both an initiator and a responder send ranging fragments, and the number of ranging fragments sent by the initiator is equal to the number of ranging fragments sent by the responder. In the bidirectional ranging scenario, there are two ranging fragment transmission manners. One is an interlaced manner (interlaced manner), and the other is a serial manner.

In a possible implementation, for interlaced transmission, a transmission start time interval t_{O} between a first ranging fragment sent by the first communication apparatus and a first ranging fragment sent by the second communication apparatus is less than or equal to 0.5 milliseconds. For serial transmission, a transmission start time interval t_{O} between a last ranging fragment sent by the first communication apparatus and a first ranging fragment sent by the second communication apparatus is less than or equal to 0.5 milliseconds. For an implementation and related descriptions of t_{O}, refer to the related descriptions in the embodiment shown in FIG. 9. Details are not described herein again. For example, t_{O} satisfies the foregoing formula (2-1).

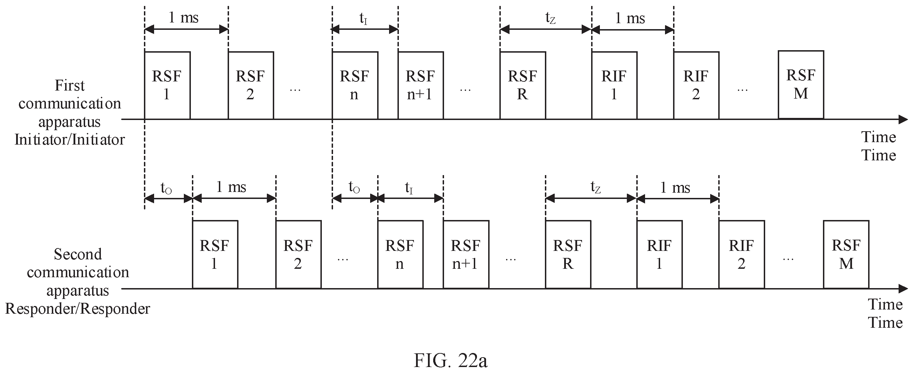

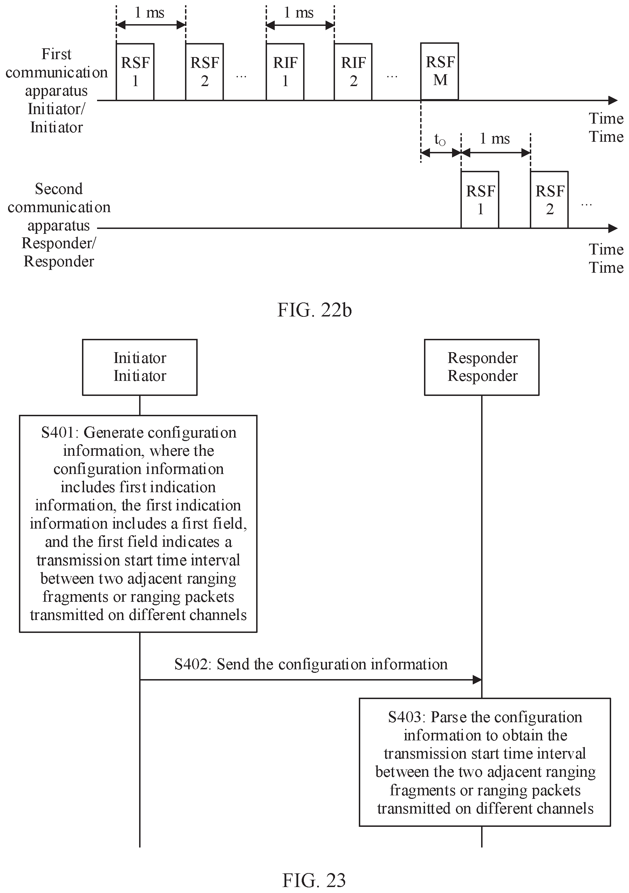

For example, FIG. 22a is another diagram of interlaced transmission according to an embodiment of this application. FIG. 22b is another diagram of serial transmission according to an embodiment of this application. FIG. 22a and FIG. 22b use an example in which the first communication apparatus is an initiator and the second communication apparatus is a responder. As shown in FIG. 22a and FIG. 22b, for ranging fragments sent by a device, a transmission start time interval between two adjacent RSFs or two adjacent RIFs transmitted on different channels is t_{I}, and a transmission start time interval between a last RSF and a first RIF is t_{Z}. A transmission start time interval between two adjacent RSFs or RIFs transmitted on a same channel is equal to 1 millisecond. In FIG. 22a, a transmission start time interval between a first RSF sent by the first communication apparatus (initiator) and a first RSF sent by the second communication apparatus (responder) is t_{O}. In FIG. 22b, a transmission start time interval between a last RIF sent by the first communication apparatus (initiator) and a first RSF sent by the second communication apparatus (responder) is t_{O}. For example, t_{O} may be fixed at 0.5 milliseconds, or t_{O} may satisfy the foregoing formula (2-1).

It may be understood that FIG. 22a and FIG. 22b are merely examples. In actual application, the initiator and the responder may send only RSFs or send only RIFs. This is not limited in embodiments of this application.

It may be further understood that, because it takes time to transmit a ranging fragment between the first communication apparatus and the second communication apparatus, the time is referred to as one-way flight time (a value of the one-way flight time is related to a distance between the first communication apparatus and the second communication apparatus). Therefore, for interlaced transmission, a start time interval between a first ranging fragment sent by the first communication apparatus and a first ranging fragment received by the first communication apparatus is less than or equal to (0.5 ms+one-way flight time). For serial transmission, a start time interval between a last ranging fragment sent by the first communication apparatus and a first ranging fragment received by the first communication apparatus is less than or equal to (0.5 ms+one-way flight time).

In a possible implementation, the transmission start time interval (t_{I}) between the two adjacent ranging fragments (for example, two adjacent RSFs or two adjacent RIFs) transmitted on different channels may be further greater than or equal to tₘᵢₙ. For an implementation and related descriptions of tₘᵢₙ, refer to related descriptions in the embodiment shown in FIG. 9. Details are not described herein again.

S303: The second communication apparatus determines a channel impulse response based on the received P ranging fragments.

In a possible implementation, for an implementation of step S303 in this embodiment of this application, refer to the implementation of step S103 in the embodiment shown in FIG. 9. Details are not described herein again.

In this embodiment of this application, frequency stitching is used in a multi-millisecond ranging process, and a plurality of RSFs or a plurality of RIFs are transmitted on one channel, so that (long-range) ranging accuracy can be improved. In addition, when the in-sequence channel order is used, if a frequency overlap rate between channels is 25% or there is no overlap, the transmission start time interval between the two adjacent ranging fragments transmitted on different channels is allowed to be less than 1 millisecond. In addition, when the out-of-sequence channel order is used, the transmission start time interval between the two adjacent ranging fragments transmitted on different channels may also be less than 1 millisecond. In this way, an interval between the fragments can be reduced, thereby reducing time required for ranging and improving ranging efficiency.

The ranging method shown in FIG. 20 is described by using ranging fragments (for example, RSFs or RIFs) as an example. Certainly, the ranging method provided in this embodiment of this application may alternatively be implemented by using ranging packets (ranging packet). In an optional embodiment, for the ranging packets (or ranging PPDUs), P is equal to a product of n and K. In other words, step S301 and step S302 shown in FIG. 20 may be understood as follows: The first communication apparatus generates P(=n*K) ranging packets, and sends the P(=n*K) ranging packets to the second communication apparatus through K channels, where n (n is an integer greater than 1) ranging packets are transmitted on each of the K channels, and a transmission start time interval between two adjacent ranging packets transmitted on different channels is less than or equal to T milliseconds. For example, T is equal to 1. For another example, if an average value of maximum power spectral density (PSD) of a UWB signal within a milliseconds does not exceed a threshold, T is equal to a. For ease of understanding, the following uses an example in which T is equal to 1 for description. Correspondingly, step S303 shown in FIG. 20 may be understood as follows: The second communication apparatus determines a channel impulse response based on the received P ranging packets.

For example, a transmission start time interval between two adjacent ranging fragments transmitted on a same channel is equal to 1 millisecond.

For example, a channel transmission order of the K channels is: sequentially using the K channels in ascending or descending order of center frequencies. When there is no (frequency) overlap between the K channels, or an overlap rate between two adjacent channels in the K channels is 25%, the transmission start time interval (t_{I}) between the two adjacent ranging fragments transmitted on different channels may be less than 1 millisecond. When an overlap rate between two adjacent channels in the K channels is 50% or 75%, the transmission start time interval (t_{I}) between the two adjacent ranging fragments transmitted on different channels may be equal to 1 millisecond. For another example, the channel transmission order of the K channels is: skipping sequentially using the K channels in ascending or descending order of center frequencies, or using the K channels in ascending or descending order of center frequencies in a non-sequential manner. In this case, the transmission start time interval (t_{I}) between the two adjacent ranging fragments transmitted on different channels may be less than 1 millisecond.

For example, for interlaced transmission, a transmission start time interval t_{O} between a first ranging packet sent by the first communication apparatus and a first ranging packet sent by the second communication apparatus is less than or equal to 0.5 milliseconds. For serial transmission, a transmission start time interval t_{O} between a last ranging packet sent by the first communication apparatus and a first ranging packet sent by the second communication apparatus is less than or equal to 0.5 milliseconds. For example, t_{O} may satisfy the foregoing formula (2-1), or may be fixed at 0.5 milliseconds. For a specific implementation of t_{O}, refer to the foregoing descriptions. Details are not described herein again. It may be understood that, because it takes time to transmit a ranging packet between the first communication apparatus and the second communication apparatus, the time is referred to as one-way flight time (a value of the one-way flight time is related to a distance between the first communication apparatus and the second communication apparatus). Therefore, for interlaced transmission, a start time interval between a first ranging packet sent by the first communication apparatus and a first ranging packet received by the first communication apparatus is less than or equal to (0.5 ms+one-way flight time). For serial transmission, a start time interval between a last ranging packet sent by the first communication apparatus and a first ranging packet received by the first communication apparatus is less than or equal to (0.5 ms+one-way flight time).

In this embodiment of this application, frequency stitching is used in a multi-millisecond ranging process, and a plurality of ranging packets are transmitted on one channel, so that (long-range) ranging accuracy can be improved. In addition, when the in-sequence channel order is used, if a frequency overlap rate between channels is 25% or there is no overlap, the transmission start time interval between the two adjacent ranging packets transmitted on different channels is allowed to be less than 1 millisecond. In addition, when the out-of-sequence channel order is used, the transmission start time interval between the two adjacent ranging packets transmitted on different channels may also be less than 1 millisecond. In this way, an interval between the ranging packets can be reduced, thereby reducing time required for ranging and improving ranging efficiency.

FIG. 23 is another schematic flowchart of an information configuration method according to an embodiment of this application. An initiator (initiator) in the method may be the first communication apparatus or the second communication apparatus. This is not limited in embodiments of this application. Correspondingly, a responder (responder) may be the second communication apparatus or the first communication apparatus. In a possible implementation, the information configuration method shown in FIG. 23 may be implemented in combination with the ranging method shown in FIG. 20, or may be implemented independently. When the information configuration method shown in FIG. 23 is implemented in combination with the ranging method shown in FIG. 20, the information configuration method shown in FIG. 23 may be performed before step S202 in FIG. 20.

As shown in FIG. 23, the information configuration method includes but is not limited to the following steps:
S401: The initiator (initiator) generates configuration information, where the configuration information includes first indication information, the first indication information includes a first field, and the first field indicates a transmission start time interval between two adjacent ranging fragments or ranging packets transmitted on different channels. For example, the two adjacent ranging fragments are both RSFs or RIFs.
S402: The initiator (initiator) sends the configuration information. Correspondingly, the responder (responder) receives the configuration information.
S403: The responder (responder) parses the configuration information to obtain the transmission start time interval between the two adjacent ranging fragments or ranging packets transmitted on different channels.

In a possible implementation, the configuration information may include the first indication information, and the first indication information may indicate a parameter for frequency stitching. For example, the configuration information may further include one or more of the following: second indication information or third indication information. The second indication information may indicate whether the first indication information is present. When the second indication information indicates that the first indication information is not present, the third indication information may indicate a UWB channel used for multi-millisecond ranging. When the second indication information indicates that the first indication information is present, the third indication information may indicate a base channel (Base Channel) for multi-millisecond ranging using frequency stitching, or indicate a base channel for frequency stitching. In this embodiment of this application, the second indication information indicates that the first indication information is present. In other words, the second indication information in this embodiment of this application indicates that the first indication information is present in the configuration information.

In a possible implementation, the configuration information may be configured through an ultra-wideband (UWB). In other words, the initiator may send the configuration information through the UWB. In another possible implementation, the configuration information may alternatively be configured through a narrowband (NB). In other words, the initiator may send the configuration information through the NB. For a specific implementation of the configuration information, refer to related descriptions in the embodiment shown in FIG. 13.

In a possible implementation, the first indication information (for example, an MMS Frequency Stitching Parameters field) may include the first field. The first field may indicate the transmission start time interval (t_{I}) between the two adjacent ranging fragments (for example, two adjacent RSFs or two adjacent RIFs) or the two adjacent ranging packets transmitted on different channels. For example, the first indication information may further include a second field. The second field may indicate the number of ranging fragments or ranging packets transmitted on each channel. It may be understood that, if the number of ranging fragments or ranging packets transmitted on each channel is the same, the second field may indicate only one value (for example, the value of n in the embodiment shown in FIG. 20). For example, the first indication information may further include a third field. The third field may indicate a transmission start time interval (t_{O}) between a first ranging fragment (or ranging packet) of the initiator and a first ranging fragment (or ranging packet) of the responder. Alternatively, the third field may indicate a transmission start time interval (t_{O}) between a last ranging fragment (or ranging packet) of the initiator and a first ranging fragment (or ranging packet) of the responder.

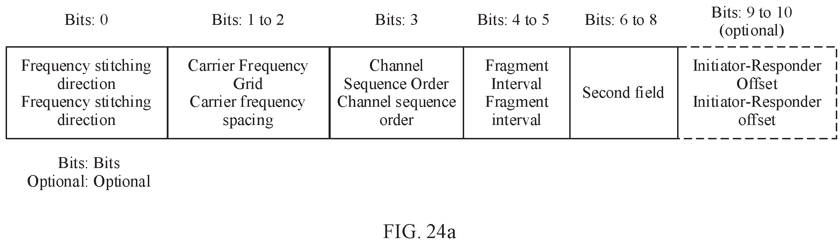

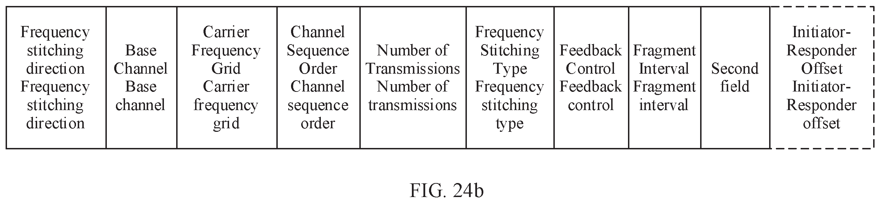

For example, the first indication information is the MMS Frequency Stitching Parameters field. FIG. 24a is a diagram of still another frame format of an MMS Frequency Stitching Parameters field according to an embodiment of this application. FIG. 24b is a diagram of yet another frame format of an MMS Frequency Stitching Parameters field according to an embodiment of this application. As shown in FIG. 24a and FIG. 24b, the MMS Frequency Stitching Parameters field includes but is not limited to; a fragment interval (Fragment Interval) field (that is, the first field) and the second field, and optionally may further include an initiator-responder offset (Initiator-Responder Offset) field (that is, the third field). The Fragment Interval field (that is, the first field) may indicate a transmission start time interval (t_{I}) between two adjacent RSFs, two adjacent RIFs, or two adjacent ranging packets transmitted on different channels. For example, when a value of the Fragment Interval field is a first value (for example, a binary value 00), t_{I} is 1200 RSTUs (that is, 1 ms); when a value of the Fragment Interval field is a second value (for example, a binary value 01), t_{I} is 900 RSTUs; when a value of the Fragment Interval field is a third value (for example, a binary value 10), t_{I} is 600 RSTUs; or when a value of the Fragment Interval field is a fourth value (for example, a binary value 11), t_{I} is 300 RSTUs. The second field may indicate the number of segments or packets transmitted on each channel (that is, the value of n). Because a transmission start time interval between two adjacent ranging fragments/ranging packets transmitted on a channel is equal to 1 ms, the second field may further indicate transmission duration on each channel (and may indirectly indicate the number of segments or packets transmitted on each channel). For a value and a meaning of the Initiator-Responder Offset field, refer to the foregoing descriptions in FIG. 16. Details are not described herein again.

For meanings of other fields in FIG. 24a and FIG. 24b, refer to the foregoing descriptions (FIG. 16 and FIG. 17). Details are not described herein again.

In a possible implementation, when this embodiment of this application is implemented in combination with the ranging method shown in FIG. 20, the first communication apparatus and the second communication apparatus in FIG. 20 perform ranging based on content of the configuration information. For example, the first communication apparatus transmits ranging fragments based on t_{I} indicated by the first field (for example, the Fragment Interval field) and n indicated by the second field.

An embodiment of this application provides a method for configuring frequency stitching parameters (Frequency Stitching Parameters) in MMS ranging, to lay a foundation for using frequency stitching in a subsequent multi-millisecond ranging process, thereby obtaining higher ranging accuracy and ranging efficiency.

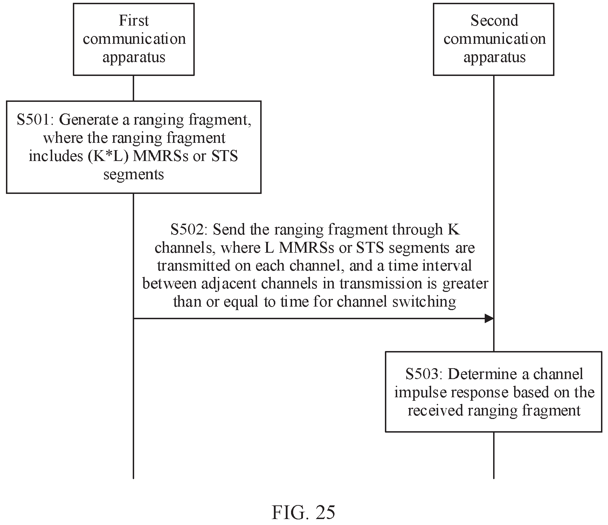

FIG. 25 is still another schematic flowchart of a ranging method according to an embodiment of this application. A first communication apparatus and a second communication apparatus in the method may be any two devices that can perform data communication in FIG. 1 or FIG. 2. In a possible implementation, the first communication apparatus in the method may be used as an initiator (initiator), and the second communication apparatus may be used as a responder (responder). Certainly, the first communication apparatus may alternatively be used as a responder (responder), and the second communication apparatus may be used as an initiator (initiator). This is not limited in embodiments of this application.

As shown in FIG. 25, the ranging method includes but is not limited to the following steps:
S501: The first communication apparatus generates a ranging fragment, where the ranging fragment includes (K*L) MMRSs or STS segments.
S502: The first communication apparatus sends the ranging fragment to the second communication apparatus through K channels, where L MMRSs or STS segments are transmitted on each channel, and a time interval between adjacent channels in transmission is greater than or equal to time for channel switching. Both L and K are integers greater than 1.

In a possible implementation, the ranging fragment may be an RSF. In this case, one RSF may include the (K*L) MMRSs. Alternatively, the ranging fragment may be an RIF. In this case, one RIF may include the (K*L) STS segments (STS segment). A value of L (that is, the number of MMRSs or STS segments transmitted on each channel) may be determined through signaling interaction between a receiver and a transmitter, or may be agreed on in a standard protocol.

In a possible implementation, the K channels may be used for frequency stitching (Frequency Stitching), and K may be an integer greater than 1. The L MMRSs or STS segments are transmitted on each of the K channels. The time interval between the adjacent channels in transmission is greater than or equal to the time for channel switching. The time for channel switching may be a fixed time interval, and the time interval may be in a unit of duration of a preamble (preamble) symbol. Certainly, the time interval may alternatively be in a unit of duration of another symbol, for example, in a unit of duration of an MMRS. This is not limited in embodiments of this application. For example, if duration of one preamble symbol is T_{psym}, the time for channel switching may be represented as A*T_{psym}. The symbol "*" represents a "multiplication" or "multiplied by" operation. A is a constant, for example, A is equal to 40.

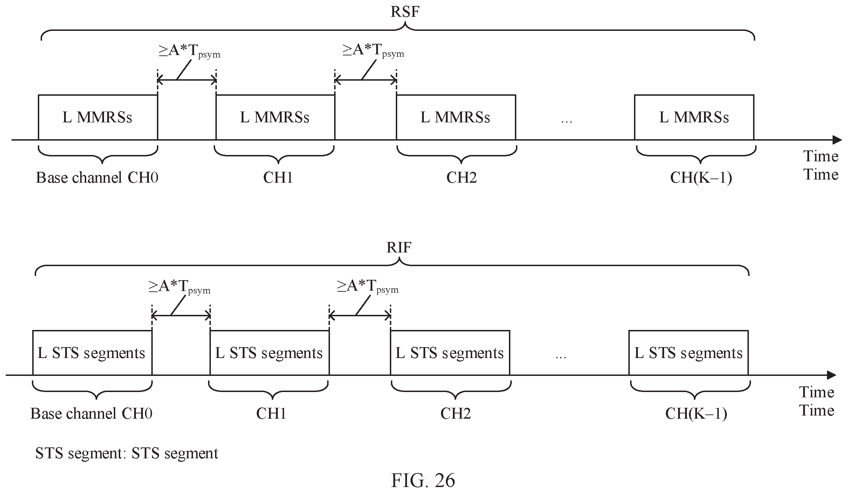

For example, FIG. 26 is a diagram of frequency stitching in a ranging fragment according to an embodiment of this application. It is assumed that a base channel of the K channels is CH0, and the channel transmission order of the K channels is CH0, CH1, CH2, ..., and CH(K-1). As shown in FIG. 26, in one RSF, the first L MMRSs are transmitted on the base channel (CH0), an (L+1)^{th} MMRS to a 2L^{th} MMRS are transmitted on the channel CH1, a (2L+1)^{th} MMRS to a 3L^{th} MMRS are transmitted on the channel CH2, and the rest may be deduced by analogy. Finally, the last L MMRSs are transmitted on the channel CH(K-1). Similarly, in one RIF, the first L STS segments are transmitted on the base channel (CH0), an (L+1)^{th} STS segment to a 2L^{th} STS segment are transmitted on the channel CH1, a (2L+1)^{th} STS segment to a 3L^{th} STS segment are transmitted on the channel CH2, and the rest may be deduced by analogy. Finally, the last L STS segments are transmitted on the channel CH(K-1). As shown in FIG. 26, a time interval between adjacent channels in transmission is greater than or equal to A*T_{psym}. In other words, an interval between transmission end time of a (j*L)^{th} MMRS and transmission start time of a (j*L+1)^{th} MMRS in one RSF is greater than or equal to A*T_{psym}. A value of j is 1, 2, 3, ..., or K.

In a possible implementation, a channel transmission order of the K channels may be: sequentially using the K channels in ascending or descending order of center frequencies, that is, in-sequence channel order (in-sequence channel order). Alternatively, the channel transmission order of the K channels may be: skipping sequentially using the K channels in ascending or descending order of center frequencies. In other words, the channel transmission order of the K channels may be: using the K channels in the ascending or descending order of the center frequencies in a non-sequential manner, that is, out-of-sequence channel order (out-of-sequence channel order).

S503: The second communication apparatus determines a channel impulse response based on the received ranging fragment.

In a possible implementation, the second communication apparatus receives the ranging fragment through the K channels. It may be understood that a manner in which the second communication apparatus receives the ranging fragment through the K channels is the same as a manner in which the first communication apparatus sends the ranging fragment through the K channels. Details are not described herein again. The second communication apparatus may calculate one channel impulse response each time the second communication apparatus receives L MMRSs/STS segments, then combine K channel impulse responses corresponding to the ranging fragment into one channel impulse response, and determine receiving timestamp information based on the channel impulse response. The second communication apparatus may further feed back the receiving timestamp information to the first communication apparatus, so that the first communication apparatus determines the distance between the first communication apparatus and the second communication apparatus based on the receiving timestamp information. For example, in a measurement report (measurement report) phase, if ranging information (for example, the receiving timestamp information) is exchanged by using a UWB channel, the second communication apparatus may feed back the receiving timestamp information to the first communication apparatus by using a base channel or a channel for transmitting the last L MMRSs/STS segments. In this way, the number of times of channel switching can be reduced.

It may be understood that, in this embodiment of this application, an example in which the first communication apparatus generates and sends one ranging fragment is used for description. However, in actual application, the first communication apparatus may generate and send a plurality of ranging fragments, and processes each ranging fragment in a same manner. For example, when there are a plurality of ranging fragments, a transmission start time interval between two adjacent RSFs is 1 ms, a transmission start time interval between two adjacent RIFs is also 1 ms, and a transmission start time interval between a last RSF and a first RIF is 2 ms.

It may be further understood that the ranging method in this embodiment of this application may be applied to a unidirectional ranging scenario or a bidirectional ranging scenario. When the ranging method in this embodiment of this application is applied to the bidirectional ranging scenario, the number of MMRSs/STS segments sent by the initiator is equal to the number of MMRSs/STS segments sent by the responder, time intervals between MMRSs/STS segments in one ranging fragment are also equal, and time intervals between different ranging fragments are also equal.

In this embodiment of this application, MMRSs/STS segments in one ranging fragment are allocated to different channels for transmission, to implement frequency stitching in the ranging fragment, thereby improving ranging accuracy.

The foregoing content describes in detail the methods provided in this application. To facilitate implementation of the foregoing solutions in embodiments of this application, embodiments of this application further provide corresponding apparatuses or devices.

The foregoing content describes in detail the methods provided in this application. To facilitate implementation of the foregoing solutions in embodiments of this application, embodiments of this application further provide corresponding apparatuses or devices.

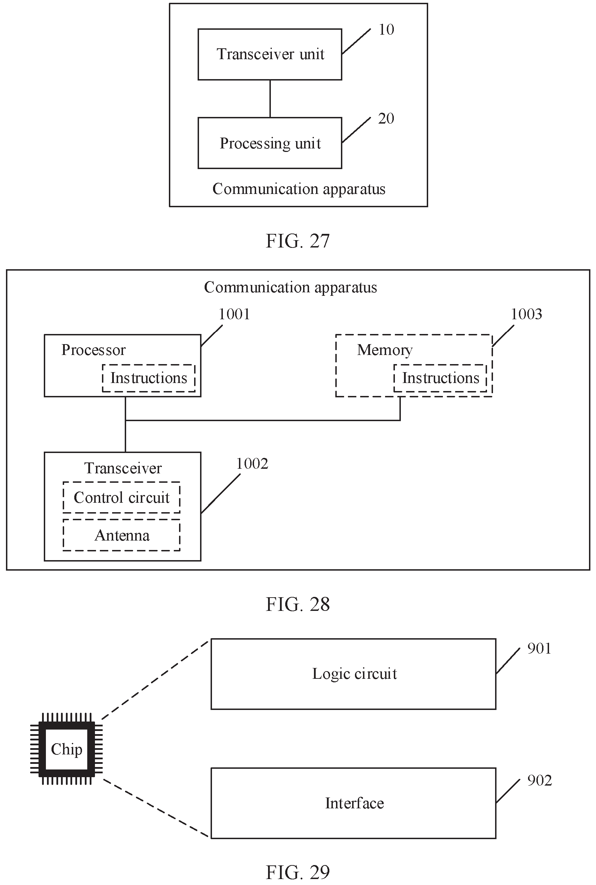

In this application, a communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely logical function division. In actual implementation, another division manner may be used. The following describes in detail communication apparatuses in embodiments of this application with reference to FIG. 27 to FIG. 29.

FIG. 27 is a diagram of a structure of a communication apparatus according to an embodiment of this application. As shown in FIG. 27, the communication apparatus includes a transceiver unit 10 and a processing unit 20. The transceiver unit 10 may implement a corresponding communication function, and the processing unit 20 is configured to perform data processing. For example, the transceiver unit 10 may also be referred to as a communication interface, a communication unit, or the like.

In some embodiments of this application, the communication apparatus may be the first communication apparatus shown above. To be specific, the communication apparatus shown in FIG. 27 may be configured to perform steps, functions, or the like performed by the first communication apparatus in the foregoing method embodiments. For example, the communication apparatus may be the first communication apparatus, or may be a chip, a functional module, or the like configured in the first communication apparatus. This is not limited in embodiments of this application. The transceiver unit 10 is configured to perform receiving/sending-related operations of the first communication apparatus in the foregoing method embodiments, and the processing unit 20 is configured to perform processing-related operations of the first communication apparatus in the foregoing method embodiments.

The processing unit 20 is configured to generate P ranging fragments or P ranging packets. The transceiver unit 10 is configured to send the P ranging fragments or the P ranging packets to a second communication apparatus through K channels. One ranging fragment or ranging packet is sequentially transmitted on the K channels, K is an integer greater than 1, P is greater than or equal to K, and a transmission start time interval between two adjacent ranging fragments or ranging packets is less than or equal to 1 millisecond.

It may be understood that the transceiver unit 10 may send a ranging fragment or ranging packet to another communication apparatus, or the transceiver unit 10 outputs the ranging fragment or ranging packet from the processing unit 20 to another component or another functional module in the communication apparatus. Related descriptions of outputting other information by the transceiver unit are similar. Details are not described below again.

For example, that one ranging fragment or ranging packet is sequentially transmitted on the K channels includes: when P is equal to K, K ranging fragments or ranging packets are sequentially transmitted on the K channels, and one ranging fragment or ranging packet is transmitted each time; or when P is greater than K, P1 of the P ranging fragments are sequentially transmitted on the K channels and then (P-P1) ranging fragments are sequentially transmitted through the K channels, and one ranging fragment is transmitted each time, where P1 is equal to K, or (P-P1) is equal to K.

For example, sequentially transmitting on the K channels includes: sequentially using the K channels in ascending or descending order of center frequencies, or skipping sequentially using the K channels in ascending or descending order of center frequencies.

For example, a channel transmission order of the K channels is: sequentially using the K channels in the ascending or descending order of the center frequencies. When there is no overlap between the K channels or an overlap rate is 25%, the transmission start time interval between the two adjacent ranging fragments or ranging packets is less than 1 millisecond. Alternatively, when an overlap rate between the K channels is 50% or 75%, the transmission start time interval between the two adjacent ranging fragments or ranging packets is equal to 1 millisecond.

For example, when the channel transmission order of the K channels is: skipping sequentially using the K channels in the ascending or descending order of the center frequencies, the transmission start time interval between the two adjacent ranging fragments or ranging packets is less than 1 millisecond.

For example, both the two adjacent ranging fragments are RSFs, or both the two adjacent ranging fragments are RIFs.

For example, a transmission start time interval between a first ranging fragment or ranging packet of the first communication apparatus and a first ranging fragment or ranging packet of the second communication apparatus is less than or equal to 0.5 milliseconds.

For example, a transmission start time interval between a last ranging fragment or ranging packet of the first communication apparatus and a first ranging fragment or ranging packet of the second communication apparatus is less than or equal to 0.5 milliseconds.

For example, the transmission start time interval between the first ranging fragment or ranging packet of the first communication apparatus and the first ranging fragment or ranging packet of the second communication apparatus is to. The transmission start time interval between the last ranging fragment or ranging packet of the first communication apparatus and the first ranging fragment or ranging packet of the second communication apparatus is also t_{O}. t_{O} satisfies: ${t}_{O} = \frac{1}{2} {t}_{I} .$

t_{I} represents the transmission start time interval between the two adjacent ranging fragments or ranging packets.

For example, the transceiver unit 10 is further configured to send or receive configuration information, where the configuration information includes first indication information, the first indication information includes a first field, and the first field indicates the transmission start time interval between the two adjacent ranging fragments or ranging packets.

It may be understood that the transceiver unit 10 may receive the configuration information from another communication apparatus, or the transceiver unit 10 may input the configuration information from another component or another functional module in the communication apparatus. Related descriptions of inputting other information by the transceiver unit are similar. Details are not described below again.

For example, the first indication information further includes a second field. The second field indicates the transmission start time interval between the first ranging fragment or ranging packet of the first communication apparatus and the first ranging fragment or ranging packet of the second communication apparatus. Alternatively, the second field indicates the transmission start time interval between the last ranging fragment or ranging packet of the first communication apparatus and the first ranging fragment or ranging packet of the second communication apparatus.

For example, the configuration information further includes one or more of the following: second indication information or third indication information. The second indication information indicates whether the first indication information is present. When the second indication information indicates that the first indication information is not present, the third indication information indicates an ultra-wideband UWB channel used for multi-millisecond ranging. When the second indication information indicates that the first indication information is present, the third indication information indicates a base channel for multi-millisecond ranging using frequency stitching.

In this embodiment of this application, for descriptions of the K channels, the P ranging fragments, the P ranging packets, the transmission start time interval between the two adjacent ranging fragments or ranging packets, the configuration information, and the like, refer to descriptions in the foregoing method embodiments. Details are not described herein again.

It may be understood that the specific descriptions of the transceiver unit and the processing unit in this embodiment of this application are merely examples. For specific functions, steps, or the like performed by the transceiver unit and the processing unit, refer to the foregoing method embodiments. Details are not described herein again. In addition, for technical effect of this embodiment of this application, refer to technical effect of the foregoing method embodiments. For brevity, details are not described herein again.

FIG. 27 is reused. In some other embodiments of this application, the communication apparatus may be the second communication apparatus shown above. To be specific, the communication apparatus shown in FIG. 27 may be configured to perform steps, functions, or the like performed by the second communication apparatus in the foregoing method embodiments. For example, the communication apparatus may be the second communication apparatus, or may be a chip, a functional module, or the like configured in the second communication apparatus. This is not limited in embodiments of this application. The transceiver unit 10 is configured to perform receiving/sending-related operations of the second communication apparatus in the foregoing method embodiments, and the processing unit 20 is configured to perform processing-related operations of the second communication apparatus in the foregoing method embodiments.

The transceiver unit 10 is configured to sequentially receive P ranging fragments or P ranging packets through K channels, where K is an integer greater than 1, P is greater than or equal to K, and a transmission start time interval between two adjacent ranging fragments or ranging packets is less than or equal to 1 millisecond. The processing unit 20 is configured to determine a channel impulse response based on the P ranging fragments or the P ranging packets.

In this embodiment of this application, for descriptions of the K channels, the P ranging fragments, the P ranging packets, the transmission start time interval between the two adjacent ranging fragments or ranging packets, and the like, refer to descriptions in the foregoing method embodiments. Details are not described herein again.

It may be understood that the specific descriptions of the transceiver unit and the processing unit in this embodiment of this application are merely examples. For specific functions, steps, or the like performed by the transceiver unit and the processing unit, refer to the foregoing method embodiments. Details are not described herein again. In addition, for technical effect of this embodiment of this application, refer to technical effect of the foregoing method embodiments. For brevity, details are not described herein again.

The foregoing describes the communication apparatus in embodiments of this application, and the following describes a possible product form of the communication apparatus. It should be understood that any form of product that has functions of the communication apparatus in FIG. 27 falls within the protection scope of embodiments of this application. It should be further understood that the following descriptions are merely examples, and do not limit a product form of the communication apparatus in embodiments of this application.

In a possible implementation, in the communication apparatus shown in FIG. 27, the processing unit 20 may be one or more processors, and the transceiver unit 10 may be a transceiver, or the transceiver unit 10 may be a sending unit and a receiving unit. The sending unit may be a transmitter, and the receiving unit may be a receiver. The sending unit and the receiving unit are integrated into one component, for example, a transceiver. In embodiments of this application, the processor and the transceiver may be coupled, or the like. A connection manner between the processor and the transceiver is not limited in embodiments of this application. In a process of performing the foregoing method, a process of sending information (for example, sending a ranging fragment, a ranging packet, or configuration information) in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information (for example, receiving a ranging fragment, a ranging packet, or configuration information) in the foregoing method may be understood as a process of receiving the input information by the processor. When the processor receives the input information, the transceiver receives the information, and inputs the information into the processor. Further, after the transceiver receives the information, other processing may need to be performed on the information before the information is input into the processor.

FIG. 28 is a diagram of another structure of a communication apparatus according to an embodiment of this application. The communication apparatus may be a first communication apparatus or a second communication apparatus, or may be a chip in the first communication apparatus or the second communication apparatus. FIG. 28 shows only main components of the communication apparatus. In addition to a processor 1001, the communication apparatus may further include a transceiver 1002, a memory 1003, and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and the data. The transceiver 1002 may include a control circuit and an antenna. The control circuit is mainly configured to: perform conversion between a baseband signal and a radio frequency signal, and process the radio frequency signal. The antenna is mainly configured to receive/send a radio frequency signal in a form of an electromagnetic wave. The input/output apparatus, such as a touchscreen, a display, or a keyboard, is mainly configured to: receive data input by a user, and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to a radio frequency circuit. The radio frequency circuit performs radio frequency processing on the baseband signal, and then sends the radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the transceiver 1002, and the memory 1003 may be connected through a communication bus.

For example, when the communication apparatus is configured to perform the steps, the method, or the functions performed by the first communication apparatus in the method embodiment shown in FIG. 9, the processor 1001 may be configured to perform step S101 in FIG. 9, and/or another process of the technology described in this specification; and the transceiver 1002 may be configured to perform step S102 in FIG. 9, and/or another process of the technology described in this specification.

For example, when the communication apparatus is configured to perform the steps, the method, or the functions performed by the second communication apparatus in the method embodiment shown in FIG. 9, the processor 1001 may be configured to perform step S103 in FIG. 9, and/or another process of the technology described in this specification; and the transceiver 1002 may be configured to receive a ranging fragment, and/or perform another process of the technology described in this specification.

For example, when the communication apparatus is configured to perform the steps, the method, or the functions performed by the initiator in the method embodiment shown in FIG. 13, the processor 1001 may be configured to perform step S201 in FIG. 13, and/or another process of the technology described in this specification; and the transceiver 1002 may be configured to perform step S202 in FIG. 13, and/or another process of the technology described in this specification.

For example, when the communication apparatus is configured to perform the steps, the method, or the functions performed by the responder in the method embodiment shown in FIG. 13, the processor 1001 may be configured to perform step S203 in FIG. 13, and/or another process of the technology described in this specification; and the transceiver 1002 may be configured to receive configuration information, and/or perform another process of the technology described in this specification.

For example, when the communication apparatus is configured to perform the steps, the method, or the functions performed by the first communication apparatus in the method embodiment shown in FIG. 20, the processor 1001 may be configured to perform step S301 in FIG. 20, and/or another process of the technology described in this specification; and the transceiver 1002 may be configured to perform step S302 in FIG. 20, and/or another process of the technology described in this specification.

For example, when the communication apparatus is configured to perform the steps, the method, or the functions performed by the second communication apparatus in the method embodiment shown in FIG. 20, the processor 1001 may be configured to perform step S303 in FIG. 20, and/or another process of the technology described in this specification; and the transceiver 1002 may be configured to receive a ranging fragment, and/or perform another process of the technology described in this specification.

For example, when the communication apparatus is configured to perform the steps, the method, or the functions performed by the initiator in the method embodiment shown in FIG. 23, the processor 1001 may be configured to perform step S401 in FIG. 23, and/or another process of the technology described in this specification; and the transceiver 1002 may be configured to perform step S402 in FIG. 23, and/or another process of the technology described in this specification.

For example, when the communication apparatus is configured to perform the steps, the method, or the functions performed by the responder in the method embodiment shown in FIG. 23, the processor 1001 may be configured to perform step S403 in FIG. 23, and/or another process of the technology described in this specification; and the transceiver 1002 may be configured to receive configuration information, and/or perform another process of the technology described in this specification.

For example, when the communication apparatus is configured to perform the steps, the method, or the functions performed by the first communication apparatus in the method embodiment shown in FIG. 25, the processor 1001 may be configured to perform step S501 in FIG. 25, and/or another process of the technology described in this specification; and the transceiver 1002 may be configured to perform step S502 in FIG. 25, and/or another process of the technology described in this specification.

For example, when the communication apparatus is configured to perform the steps, the method, or the functions performed by the second communication apparatus in the method embodiment shown in FIG. 25, the processor 1001 may be configured to perform step S503 in FIG. 25, and/or another process of the technology described in this specification; and the transceiver 1002 may be configured to receive a ranging fragment, and/or perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions, the instructions may be a computer program, and the computer program is run on the processor 1001, to enable the communication apparatus to perform the methods described in the foregoing method embodiments. The computer program may be embedded in the processor 1001. In this case, the processor 1001 may be implemented by using hardware.

In an implementation, the communication apparatus may include a circuit, and the circuit may implement a sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-type metal oxide semiconductor (nMetal-oxide-semiconductor, NMOS), a p-channel metal oxide semiconductor (positive channel metal oxide semiconductor, PMOS), a bipolar junction transistor (bipolar junction transistor, BJT), a bipolar CMOS (BiCMOS), silicon germanium (SiGe), gallium arsenide (GaAs), and the like.

It may be understood that the communication apparatus shown in this embodiment of this application may further have more components and the like than those in FIG. 28. This is not limited in embodiments of this application. The foregoing method performed by the processor and the transceiver is merely an example. For specific steps performed by the processor and the transceiver, refer to descriptions in the foregoing method embodiments.

In another possible implementation, in the communication apparatus shown in FIG. 27, the processing unit 20 may be one or more logic circuits, and the transceiver unit 10 may be an input/output interface, or may be referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 29 is a diagram of still another structure of a communication apparatus according to an embodiment of this application. As shown in FIG. 29, the communication apparatus shown in FIG. 29 includes a logic circuit 901 and an interface 902. That is, the processing unit 20 may be implemented by using the logic circuit 901, and the transceiver unit 10 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 29 shows an example in which the communication apparatus is a chip, and the chip includes the logic circuit 901 and the interface 902.

In this embodiment of this application, the logic circuit and the interface may be coupled to each other. A specific connection manner between the logic circuit and the interface is not limited in embodiments of this application.

For example, when the communication apparatus is configured to perform the methods, the functions, or the steps performed by the first communication apparatus in the foregoing method embodiments, the logic circuit 901 is configured to generate P ranging fragments or P ranging packets; and the interface 902 is configured to output the P ranging fragments or the P ranging packets through K channels.

For example, when the communication apparatus is configured to perform the methods, the functions, or the steps performed by the second communication apparatus in the foregoing method embodiments, the interface 902 is configured to input P ranging fragments or P ranging packets through K channels; and the logic circuit 901 is configured to determine a channel impulse response based on the P ranging fragments or the P ranging packets.

In this embodiment of this application, for specific descriptions of the P ranging fragments, the P ranging packets, the K channels, and the like, refer to the method embodiment shown in FIG. 9 or FIG. 20. Details are not described herein again.

For example, when the communication apparatus is configured to perform the methods, the functions, or the steps performed by the initiator in the foregoing method embodiments, the logic circuit 901 is configured to generate configuration information; and the interface 902 is configured to output the configuration information.

For example, when the communication apparatus is configured to perform the methods, the functions, or the steps performed by the responder in the foregoing method embodiments, the interface 902 is configured to input configuration information; and the logic circuit 901 is configured to parse the configuration information.

In this embodiment of this application, for specific descriptions of the configuration information and the like, refer to the method embodiment shown in FIG. 13 or FIG. 23. Details are not described herein again.

It may be understood that the communication apparatus shown in this embodiment of this application may implement the methods provided in embodiments of this application in a form of hardware, or may implement the methods provided in embodiments of this application in a form of software, or the like. This is not limited in embodiments of this application.

For specific implementations of the embodiment shown in FIG. 29, refer to the foregoing embodiments. Details are not described herein.

Embodiments of this application further provide a wireless communication system. The wireless communication system includes a first communication apparatus and a second communication apparatus. The first communication apparatus and the second communication apparatus may be configured to perform the method in any one of the foregoing embodiments.

In addition, this application further provides a computer program. The computer program is configured to implement operations and/or processing performed by the first communication apparatus in the methods provided in this application.

This application further provides a computer program. The computer program is configured to implement operations and/or processing performed by the second communication apparatus in the methods provided in this application.

This application further provides a computer-readable storage medium. The computer-readable storage medium stores computer code. When the computer code is run on a computer, the computer is enabled to perform operations and/or processing performed by the first communication apparatus in the methods provided in this application.

This application further provides a computer-readable storage medium. The computer-readable storage medium stores computer code. When the computer code is run on a computer, the computer is enabled to perform operations and/or processing performed by the second communication apparatus in the methods provided in this application.

This application further provides a computer program product. The computer program product includes computer code or a computer program. When the computer code or the computer program is run on a computer, operations and/or processing performed by the first communication apparatus in the methods provided in this application are/is performed.

This application further provides a computer program product. The computer program product includes computer code or a computer program. When the computer code or the computer program is run on a computer, operations and/or processing performed by the second communication apparatus in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, and may be electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to achieve the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A ranging method, comprising:
generating, by a first communication apparatus, P ranging fragments or P ranging packets; and
sending, by the first communication apparatus, the P ranging fragments or the P ranging packets to a second communication apparatus through K channels, wherein one ranging fragment or ranging packet is sequentially transmitted on the K channels, K is an integer greater than 1, P is greater than or equal to K, and a transmission start time interval between two adjacent ranging fragments or ranging packets is less than or equal to 1 millisecond.

2. The method according to claim 1, wherein that one ranging fragment or ranging packet is sequentially transmitted on the K channels comprises:
when P is equal to K, K ranging fragments or ranging packets are sequentially transmitted on the K channels, and one ranging fragment or ranging packet is transmitted each time; or
when P is greater than K, P1 of the P ranging fragments are sequentially transmitted on the K channels and then (P-P1) ranging fragments are sequentially transmitted on the K channels, and one ranging fragment is transmitted each time, wherein P1 is equal to K, or (P-P1) is equal to K.

3. The method according to claim 1 or 2, wherein sequentially transmitting on the K channels comprises:
sequentially using the K channels in ascending or descending order of center frequencies, or skipping sequentially using the K channels in ascending or descending order of center frequencies.

4. The method according to claim 3, wherein a channel transmission order of the K channels is: sequentially using the K channels in the ascending or descending order of the center frequencies; and
when there is no overlap between the K channels or an overlap rate is 25%, the transmission start time interval between the two adjacent ranging fragments or ranging packets is less than 1 millisecond; or
when an overlap rate between the K channels is 50% or 75%, the transmission start time interval between the two adjacent ranging fragments or ranging packets is equal to 1 millisecond.

5. The method according to claim 3, wherein when channel transmission order of the K channels is: skipping sequentially using the K channels in the ascending or descending order of the center frequencies, the transmission start time interval between the two adjacent ranging fragments or ranging packets is less than 1 millisecond.

6. The method according to any one of claims 1 to 5, wherein the two adjacent ranging fragments are both ranging sequence fragments RSFs, or the two adjacent ranging fragments are both ranging integrity fragments RIFs.

7. The method according to any one of claims 1 to 6, wherein a transmission start time interval between a first ranging fragment or ranging packet of the first communication apparatus and a first ranging fragment or ranging packet of the second communication apparatus is less than or equal to 0.5 milliseconds.

8. The method according to any one of claims 1 to 6, wherein a transmission start time interval between a last ranging fragment or ranging packet of the first communication apparatus and a first ranging fragment or ranging packet of the second communication apparatus is less than or equal to 0.5 milliseconds.

9. The method according to claim 7 or 8, wherein the transmission start time interval t_{O} between the first ranging fragment or ranging packet of the first communication apparatus and the first ranging fragment or ranging packet of the second communication apparatus, or the transmission start time interval t_{O} between the last ranging fragment or ranging packet of the first communication apparatus and the first ranging fragment or ranging packet of the second communication apparatus satisfies: ${t}_{O} = \frac{1}{2} {t}_{I} ,$ wherein
t_{I} represents the transmission start time interval between the two adjacent ranging fragments or ranging packets.

10. The method according to any one of claims 1 to 9, wherein before sending, by the first communication apparatus, the P ranging fragments or the P ranging packets to the second communication apparatus through the K channels, the method further comprises:
sending or receiving, by the first communication apparatus, configuration information, wherein the configuration information comprises first indication information, the first indication information comprises a first field, and the first field indicates the transmission start time interval between the two adjacent ranging fragments or ranging packets.

11. The method according to claim 10, wherein the first indication information further comprises a second field; and
the second field indicates the transmission start time interval between the first ranging fragment or ranging packet of the first communication apparatus and the first ranging fragment or ranging packet of the second communication apparatus; or
the second field indicates the transmission start time interval between the last ranging fragment or ranging packet of the first communication apparatus and the first ranging fragment or ranging packet of the second communication apparatus.

12. The method according to claim 10 or 11, wherein the configuration information further comprises one or more of the following: second indication information or third indication information;
the second indication information indicates whether the first indication information is present; and
when the second indication information indicates that the first indication information is not present, the third indication information indicates an ultra-wideband UWB channel used for multi-millisecond ranging; or when the second indication information indicates that the first indication information is present, the third indication information indicates a base channel for multi-millisecond ranging using frequency stitching.

13. A ranging method, comprising:
sequentially receiving, by a second communication apparatus, P ranging fragments or P ranging packets through K channels, wherein K is an integer greater than 1, P is greater than or equal to K, and a transmission start time interval between two adjacent ranging fragments or ranging packets is less than or equal to 1 millisecond; and
determining, by the second communication apparatus, a channel impulse response based on the P ranging fragments or the P ranging packets.

14. A ranging method, comprising:
generating, by a first communication apparatus, K sensing packets or K data packets; and
sending, by the first communication apparatus, the K sensing packets or the K data packets to a second communication apparatus through K channels, wherein one sensing packet or data packet is transmitted on each of the K channels, K is an integer greater than 1, and a transmission start time interval between two adjacent sensing packets or data packets is less than or equal to 1 millisecond.

15. The method according to claim 14, wherein a channel transmission order of the K channels is: sequentially using the K channels in ascending or descending order of center frequencies, or skipping sequentially using the K channels in ascending or descending order of center frequencies.

16. The method according to claim 14 or 15, wherein the channel transmission order of the K channels is: sequentially using the K channels in the ascending or descending order of the center frequencies; and
when there is no overlap between the K channels or an overlap rate is 25%, the transmission start time interval between the two adjacent sensing packets or data packets is less than 1 millisecond; or
when an overlap rate between the K channels is 50% or 75%, the transmission start time interval between the two adjacent sensing packets or data packets is equal to 1 millisecond.

17. The method according to claim 14 or 15, wherein when the channel transmission order of the K channels is: skipping sequentially using the K channels in the ascending or descending order of the center frequencies, the transmission start time interval between the two adjacent sensing packets or data packets is less than 1 millisecond.

18. The method according to any one of claims 14 to 17, wherein a transmission start time interval between a first sensing packet or data packet of the first communication apparatus and a first sensing packet or data packet of the second communication apparatus is less than or equal to 0.5 milliseconds.

19. The method according to claim 18, wherein the transmission start time interval t_{O} between the first sensing packet or data packet of the first communication apparatus and the first sensing packet or data packet of the second communication apparatus satisfies: ${t}_{O} = \frac{1}{2} {t}_{I} ,$ wherein
t_{I} represents the transmission start time interval between the two adjacent sensing packets or data packets.

20. The method according to any one of claims 14 to 19, wherein before sending, by the first communication apparatus, the K sensing packets or the K data packets to the second communication apparatus through the K channels, the method further comprises:
sending or receiving, by the first communication apparatus, configuration information, wherein the configuration information comprises indication information A and indication information B, the indication information A indicates whether to use a sensing packet for ranging, or the indication information A indicates whether to use a data packet for ranging, and the indication information B indicates the transmission start time interval between the two adjacent sensing packets or data packets.

21. A ranging method, comprising:
sequentially receiving, by a second communication apparatus, K sensing packets or K data packets through K channels, wherein K is an integer greater than 1, and a transmission start time interval between two adjacent sensing packets or data packets is less than or equal to 1 millisecond; and
determining, by the second communication apparatus, a channel impulse response based on the K sensing packets or the K data packets.

22. The method according to claim 21, wherein before sequentially receiving, by the second communication apparatus, the K sensing packets or the K data packets through the K channels, the method further comprises:
receiving or sending, by the second communication apparatus, configuration information, wherein the configuration information comprises indication information A and indication information B, the indication information A indicates whether to use a sensing packet for ranging, or the indication information A indicates whether to use a data packet for ranging, and the indication information B indicates the transmission start time interval between the two adjacent sensing packets or data packets.

23. A ranging method, comprising:
generating, by a first communication apparatus, P sensing segments; and
sending, by the first communication apparatus, the P sensing segments to a second communication apparatus through K channels, wherein at least one sensing segment is transmitted on each of the K channels, K is an integer greater than 1, and P is greater than or equal to K.

24. The method according to claim 23, wherein the P sensing segments belong to a same sensing packet, or the P sensing segments belong to a plurality of sensing packets.

25. The method according to claim 23 or 24, wherein the P sensing segments belong to the same sensing packet; and
that the at least one sensing segment is transmitted on each of the K channels comprises:
one sensing segment is transmitted on each of the K channels.

26. The method according to claim 23 or 24, wherein the P sensing segments belong to the plurality of sensing packets; and
that the at least one sensing segment is transmitted on each of the K channels comprises:
when P is equal to K, K sensing segments are sequentially transmitted on the K channels, and one sensing segment is transmitted each time; or
when P is greater than K, sensing segments that belong to a same data packet are sequentially transmitted on the K channels, and one sensing segment is transmitted each time.

27. The method according to claim 25 or 26, comprising:
sequentially transmitting on the K channels comprises:
sequentially using the K channels in ascending or descending order of center frequencies, or skipping sequentially using the K channels in ascending or descending order of center frequencies.

28. The method according to claim 26, wherein a transmission start time interval between two adjacent sensing packets in the plurality of sensing packets is less than or equal to 1 millisecond.

29. The method according to any one of claims 23 to 28, wherein before sending, by the first communication apparatus, the P sensing segments to the second communication apparatus through the K channels, the method further comprises:
sending or receiving, by the first communication apparatus, configuration information, wherein the configuration information comprises indication information A, and the indication information A indicates whether to use a sensing packet for ranging.

30. The method according to claim 29, wherein the configuration information further comprises indication information B, and the indication information B indicates the transmission start time interval between the two adjacent sensing packets.

31. A ranging method, comprising:
sequentially receiving, by a second communication apparatus, P sensing segments through K channels; and
determining, by the second communication apparatus, a channel impulse response based on the P sensing segments.

32. The method according to claim 31, wherein the P sensing segments belong to a same sensing packet, or the P sensing segments belong to a plurality of sensing packets.

33. The method according to claim 31 or 32, wherein the P sensing segments belong to the plurality of sensing packets, and a transmission start time interval between two adjacent sensing packets in the plurality of sensing packets is less than or equal to 1 millisecond.

34. The method according to any one of claims 31 to 33, wherein before sequentially receiving, by the second communication apparatus, the P sensing segments through the K channels, the method further comprises:
receiving or sending, by the second communication apparatus, configuration information, wherein the configuration information comprises indication information A, and the indication information A indicates whether to use a sensing packet for ranging.

35. The method according to claim 34, wherein the configuration information further comprises indication information B, and the indication information B indicates the transmission start time interval between the two adjacent sensing packets.

36. A communication apparatus, comprising a unit or module configured to perform the method according to any one of claims 1 to 35.

37. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 35 by using a logic circuit or by executing code instructions.

38. A readable storage medium, configured to store a program, wherein the program is executed by one or more processors, to enable an apparatus comprising the one or more processors to perform the method according to any one of claims 1 to 35.

39. A wireless communication system, comprising a first communication apparatus configured to perform the method according to any one of claims 1 to 12 and a second communication apparatus configured to perform the method according to claim 35.
